(19) **Europäisches Patentamt**
**European Patent Office**
**Office européen des brevets**

(11) **EP 4 542 064 A2**

(12) **EUROPÄISCHE PATENTANMELDUNG**

(43) Veröffentlichungstag:
**23.04.2025 Patentblatt 2025/17**

(21) Anmeldenummer: **25157145.1**

(22) Anmeldetag: **21.12.2017**

(51) Internationale Patentklassifikation (IPC):
***F16B 13/00*** *(2006.01)*

(52) Gemeinsame Patentklassifikation (CPC):
**F16B 37/127; E04C 5/10; E04G 23/0218;**
**E21D 21/0033; F16B 5/0642; F16B 25/0026**

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorität: **21.12.2016 DE 102016125201**

(62) Dokumentnummer(n) der früheren Anmeldung(en)
nach Art. 76 EPÜ:
**17825857.0 / 3 365 564**

(71) Anmelder: **Ludwig Hettich Holding GmbH & Co.**
**KG**
**78713 Schramberg-Sulgen (DE)**

(72) Erfinder: **HETTICH, Ulrich**
**78713 Schramberg (DE)**

(74) Vertreter: **Lucke, Andreas**
**Boehmert & Boehmert**
**Anwaltspartnerschaft mbB**
**Pettenkoferstrasse 22**
**80336 München (DE)**

Bemerkungen:
Diese Anmeldung ist am 11.02.2025 als
Teilanmeldung zu der unter INID-Code 62 erwähnten
Anmeldung eingereicht worden.

(54) **VERFAHREN ZUR BEFESTIGUNG VON ANBAUTEILEN AN BETON ODER MAUERWERK**

(57)  Gezeigt wird ein Verfahren zum Befestigung von Anbauteilen (10) auf einem Befestigungsgrund (12), der durch Beton oder Mauerwerk gebildet wird, mit einer Gruppe von Ankern (14), wobei für das Verhältnis $V_{Sd}/N_{Sd}$ des Bemessungswerts der Querbelastung $V_{Sd}$ und des Bemessungswerts der Zugbelastung $N_{Sd}$ mindestens eines Ankers (14) in der Ankergruppe gilt: $V_{Sd}/N_{Sd} \geq 0{,}3$, vorzugsweise $V_{Sd}/N_{Sd} \geq 0{,}6$ und besonders vorzugsweise $V_{Sd}/N_{Sd} \geq 1{,}0$, und wobei für diesen Anker die charakteristischen Widerstände bei Querbeanspruchung $V_{Rk}$ bzw. bei Zugbeanspruchung $N_{Rk}$ die folgende Beziehung erfüllen: $V_{Rk}/N_{Rk} \leq 1{,}1$. Der mindestens eine Anker (14) der Ankergruppe ist mit einem Winkel $\alpha_{Anker}$ zur Senkrechten zur Oberfläche des Befestigungsgrundes (12) derart geneigt eingesetzt ist, dass gilt:

$$\alpha_{Anker} = k * \tfrac{3}{4} * \arctan(V_{Sd}/N_{Sd}) \quad \text{für} \quad N_{Sd} > 0,$$

und

$$\alpha_{Anker} = k * 67{,}5° \quad \text{für} \quad N_{Sd} = 0,$$

mit : $0{,}8 \leq k \leq 1{,}34$, unter der Maßgabe, dass $\alpha_{Anker} \leq 75°$.

**(Forts. nächste Seite)**

EP 4 542 064 A2

Fig. 1

**Beschreibung**

GEBIET DER ERFINDUNG

Die vorliegende Erfindung betrifft ein Verfahren zur Befestigung von Anbauteilen an einem Befestigungsgrund, der durch Beton oder Mauerwerk gebildet wird. Ferner betrifft sie ein zugehöriges Computerprogramm zur Bemessung derartiger Befestigungen.

HINTERGRUND UND VERWANDTER STAND DER TECHNIK

Im Stand der Technik ist es bekannt, Anbauteile aus unterschiedlichen Werkstoffen an einem Befestigungsgrund aus Beton oder Mauerwerk zu befestigen. Dabei werden im Stand der Technik sekundär (d.h. nachträglich) eingebrachte Verankerungen stets senkrecht zur Bauteiloberfläche angeordnet. Insbesondere wird dies durch die heute in der Bautechnik geltenden internationalen Regelungen für Verankerungssysteme im Beton manifestiert, die alle gemäß Vorschrift senkrecht zur Betonoberfläche zu verankern sind.

Basis für die Bemessung von Verankerungen im Beton sind die charakteristischen Widerstände des Ankers für die verschiedenen Versagensmechanismen bei Zug- und Querbelastung. Die relevantesten Versagensmechanismen im Hinblick auf Zugbelastung sind das Stahlversagen, der Betonausbruch und das Versagen durch Herausziehen. Die wichtigsten Versagensmechanismen bei Querbelastung sind ebenfalls das Stahlversagen, ein Betonausbruch auf der lastabgewandten Seite und ein Betonkantenabbruch. Wenn Querkräfte mit Hebelarm auftreten, ist ferner ein Biegenachweis zu führen, der seinerseits Einfluss auf den charakteristischen Widerstand des Ankers bei Stahlversagen hat, und diesen, je nach Länge des Hebearms, erheblich verringern kann

Folgende Bemessungsregeln sind dabei grundsätzlich einzuhalten:

Quotient Zuglast-Einwirkung und Widerstand: $N_{Sd}/ N_{Rd} \leq 1$, und
Quotient Querlast-Einwirkung und Widerstand: $V_{Sd}/ V_{Rd} \leq 1$,
Interaktionsbedingung : $N_{Sd}/ N_{Rd}+ V_{Sd}/ V_{Rd} \leq 1{,}2$,
und Biegenachweis: $M_{Sd}/ M_{Rd}+ N_{Sd}/ N_{Rd} \leq 1$.

wobei :

$N_{Sd}$ = Bemessungswert der Zugbelastung
$V_{Sd}$ = Bemessungswert der Querbelastung
$M_{Sd}$ = Bemessungswert der Biegebelastung
---
$N_{Rd}$ = Bemessungswert des Widerstandes auf Zugbelastung
$V_{Rd}$ = Bemessungswert des Widerstandes auf Querbelastung
$M_{Rd}$ = Bemessungswert des Widerstandes auf Biegebelastung

Für eine detaillierte Beschreibung der Bemessungsnachweise wird auf die LEITLINIE FÜR DIE EUROPÄISCHE TECHNISCHE ZULASSUNG für METALLDÜBEL ZUR VERANKERUNG IM BETON verwiesen (ETAG 001, Anhang C 1997).

Unter Berücksichtigung dieser Bemessungsregelungen kann der Fachmann ausgehend von vorgegebenen Bemessungswerten im Hinblick auf Zugbelastung, Querbelastung und Biegebelastung ermitteln, ob eine geplante Befestigung von Anbauteilen an Beton oder Mauerwerk mithilfe von einer Gruppe von Ankern, die im folgenden als "Befestigungsgruppe" bezeichnet wird, möglich ist, d.h. die Bemessungsvorschriften erfüllt. Typischerweise verwendet der Fachmann hierzu ein Computerprogramm, in dem interaktiv Information eingegeben wird, die repräsentativ für die Zugbelastung, die Querbelastung und gegebenenfalls eine Biegebelastung ist, und das automatisch berechnet, ob die geplante Befestigung mit den geplanten Ankern die Bemessungsvorschriften erfüllt. Übliche Computerprogramme geben typischerweise ferner an, in welchem Umfang die Vorschriften erfüllt werden. Dabei könnte sich beispielsweise herausstellen, dass die Bemessungsvorschriften erheblich übererfüllt werden; in diesem Fall kann der Fachmann das Design abändern, beispielsweise weniger Anker verwenden, oder kostengünstigere Anker mit einem geringeren Querschnitt verwenden, und erneut die Bemessung überprüfen. Andersherum kann das Computerprogramm anzeigen, dass eine geplante Befestigung die Bemessungsvorschriften nicht erfüllt. In diesem Fall kann der Fachmann zusätzliche Anker vorsehen und/oder Anker mit einem größeren Durchmesser verwenden, und das geänderte Design erneut überprüfen.

Nicht in allen Fällen ist das Ergebnis befriedigend. Beispielsweise kann es schwierig sein, geeignete Anker für randnahe Bereiche zu wählen. Speziell in randnahen Bereichen ist die Verwendung von Ankern mit größerem Durchmesser, ungeachtet der höheren Kosten, oft nicht möglich, da dies Probleme in Hinblick auf Betonkantenbruch mit sich bringen kann. Grundsätzlich ist bei der Bemessung des charakteristischen Widerstands hinsichtlich Querbelastung der Betonkantenabbruch zu berücksichtigen, wenn der Abstand des Ankers von dem Rand das 60-fache des Durchmessers des Ankers unterschreitet. Es versteht sich daher, dass es oft von besonderem Vorteil wäre, mit einem Anker geringeren Durchmessers auszukommen. Es besteht daher Bedarf nach verbesserten Verfahren zum Befestigen von Anbauteilen an Mauerwerk oder Beton.

ZUSAMMENFASSUNG DER ERFINDUNG

Der vorliegenden Erfindung liegt die Aufgabe zugrunde, ein verbessertes Verfahren zum Befestigen von Anbauteilen an Mauerwerk oder Beton anzugeben. Diese Aufgabe wird durch Verfahren nach Anspruch 1 und ein zugehöriges Computerprogramm nach Anspruch 16 und ein Bemessungsverfahren nach Anspruch 20 gelöst. Vorteilhafte Weiterbildungen sind in den abhängigen Ansprüchen angegeben.

Die Erfindung gibt ein Verfahren zum Befestigung von Anbauteilen mit einer Gruppe von Ankern an einem Befestigungsgrund an, der durch Beton oder Mauerwerk gebildet wird.

Das Verfahren findet Anwendung für Fälle, in denen für das Verhältnis $V_{Sd}/N_{Sd}$ des Bemessungswerts der Querbelastung $V_{Sd}$ und des Bemessungswerts der Zugbelastung $N_{Sd}$ mindestens eines Ankers der Ankergruppe gilt: $V_{Sd}/N_{Sd} \geq 0{,}3$, vorzugsweise $V_{Sd}/N_{Sd} \geq 0{,}6$ und besonders vorzugsweise $V_{Sd}/N_{Sd} \geq 1{,}0$,

und wobei für diesen Anker die charakteristischen Widerstände bei Querbeanspruchung $V_{Rk}$ bzw. bei Zugbeanspruchung $N_{Rk}$ die folgende Beziehung erfüllen:

$$V_{Rk} / N_{Rk} \leq 1{,}1.$$

Dabei bezeichnen die charakteristischen Widerstände $V_{Rk}$, $N_{Rk}$ jeweils den geringsten charakteristischen Widerstand, der sich aus den unterschiedlichen Versagensarten ergibt, die bei der Bemessung berücksichtigt werden sollen, also beispielsweise $V_{Rk,s}$, $N_{Rk,s}$ im Falle des Stahlversagens, insbesondere unter Berücksichtigung eines möglicherweise vorliegenden Hebelarms, $V_{Rk,c}$, $N_{Rk,c}$ im Falle des Betonausbruchs (Betonausbruch bei Zugbelastung, Betonausbruch auf der lastabgewandten Seite oder Betonkantenabbruch bei Querbelastung) etc.

Erfindungsgemäß wird der mindestens eine Anker der Befestigungsgruppe mit einem Winkel $\alpha_{Anker}$ zur Senkrechten der Oberfläche des Befestigungsgrundes geneigt derart eingesetzt, dass gilt:

$$\alpha_{Anker} = k * \tfrac{3}{4} * \arctan(V_{Sd}/N_{Sd}) \quad \text{für} \quad N_{Sd} > 0,$$

und

$$\alpha_{Anker} = k * 67{,}5° \quad \text{für} \quad N_{Sd} = 0,$$

mit : $0{,}6 \leq k \leq 1{,}34$, vorzugsweise $0{,}8 \leq k \leq 1{,}34$, unter der Maßgabe, dass $\alpha_{Anker} \leq 75°$, wobei $\alpha_{Anker}$ der Neigungswinkel des Ankers gegenüber der Senkrechten zur Oberfläche des Befestigungsgrundes ist. Dabei ist der Neigungswinkel $\alpha_{Anker}$ in der Ebene zu messen, in der die der Bemessung zu Grunde liegende Querlast $V_{Sd}$ liegt. Innerhalb dieser Ebene ist die Orientierung des Winkels $\alpha_{Anker}$ dabei so zu wählen, dass der Winkel zwischen der Längsachse des Ankers und der resultierenden Last geringer wird, als bei der senkrechten Montage. Dies bedeutet, dass ein Kopf des Ankers verglichen mit der senkrechten Montageposition in Richtung der Querlast $V_{Sd}$ gekippt wird.

Erfindungsgemäß werden demnach im Rahmen der Befestigung eines Anbauteils an Beton oder Mauerwerk die dazu verwendeten Anker zumindest teilweise unter einem Winkel $\alpha_{Anker}$ zu der Oberfläche des Befestigungsgrundes eingesetzt, der von 90° abweicht. Dies widerspricht der gängigen Praxis, gemäß der Anker in Beton grundsätzlich senkrecht zu Betonoberfläche einzusetzen sind. Der Winkel $\alpha_{Anker}$ wird dabei gemäß der Vorschrift $\alpha_{Anker} = k * \tfrac{3}{4} * \arctan(V_{Sd}/N_{Sd})$ gewählt. Für den Fall $N_{Sd} = 0$, d.h. den Fall reiner Querbelastung, gilt $\alpha_{Anker} = k * 67{,}5°$. Dabei kann der Parameter k in einem Intervall von 0,8 bis 1,34 gewählt werden.

Der Erfindung liegt die Erkenntnis zugrunde, dass für eine bestimmte Klasse von Anwendungsfällen ein geneigter Anker bessere Tragfähigkeit gestattet, als ein gemäß dem Stand Technik senkrecht zur Oberfläche des Befestigungsgrundes eingesetzter Anker. Sehr gute Tragfähigkeiten lassen sich erzielen, wenn der Winkel $\alpha_{Anker}$ 75 % des Winkels beträgt, in dem die resultierende aus Zugbelastung und Querbelastung zur Flächennormalen der Oberfläche des Befestigungsgrundes steht, und der durch $\arctan(V_{Sd}/N_{Sd})$ berechnet werden kann. Dies entspricht dem Fall, der Parameter k den Wert 1 annimmt. Der Bereich $0{,}8 \leq k \leq 1{,}34$ definiert hierbei einen Korridor um diese bevorzugte Wahl des Winkels, der ebenfalls gute Tragfähigkeit verspricht. Innerhalb dieser Bandbreite ist der Wert des Parameters k jedoch stets so zu wählen, dass $\alpha_{Anker} \leq 75°$. Vorzugsweise ist der Parameter k so zu wählen, dass $\alpha_{Anker} \leq 70°$.

Grundsätzlich begrenzt das Stahlversagen das Lastniveau des Ankers. Im Hinblick auf den Widerstand bei Zugbeanspruchung stellt der charakteristische Widerstand $N_{Rk,s}$ des Ankers bei Stahlversagen eine Obergrenze dar, die unabhängig von der Beschaffenheit des Befestigungsgrundes, der Anordnung im Befestigungsgrund etc. nicht überstiegen werden kann. Der Wert $N_{Rk,s}$ ergibt sich aus der Gleichung

$$N_{Rk,s}= As*fuk,$$

wobei As die Querschnittsfläche des Ankers ist und fuk die charakteristische Zugfestigkeit des Stahls ist. Obwohl in der vorliegenden Offenbarung stets von Stahl als Material des Ankers ausgegangen wird, versteht es sich, dass die Erfindung nicht auf Anker aus Stahl beschränkt ist.

Der tatsächliche Widerstand bei Zugbeanspruchung kann jedoch durch andere Versagensmechanismen gegenüber dem Stahlversagen verringert sein. Andere mögliche Versagensmechanismen sind beispielsweise der Betonausbruch, und das Versagen durch Herausziehen. Für nähere Details wird auf die LEITLINIE FÜR DIE EUROPÄISCHE TECHNISCHE ZULASSUNG für METALLDÜBEL ZUR VERANKERUNG IM BETON verwiesen (ETAG 001, Anhang C, Ausgabe 1997), die durch Bezugnahme in die vorliegende Offenbarung aufgenommen wird.

Der für die Bemessung relevante charakteristische Widerstand bei Zugbeanspruchung $N_{Rk}$ ist der geringste Widerstand, der sich aus den unterschiedlichen, bei der Bemessung zu berücksichtigenden Versagensmechanismen ergeben kann.

Im Hinblick auf den Widerstand bei Querbeanspruchung stellt wiederum $V_{Rk,s}$ der charakteristische Widerstand im Hinblick auf das Stahlversagen ohne Hebelarm die obere Grenze dar. Falls kein Hebelarm vorliegt, kann davon ausgegangen werden, dass im Hinblick auf das reine Stahlversagen die Quertragfähigkeit maximal das 0,5 fache der Zugtragfähigkeit des Ankers betragen kann, dass also gilt

$$V_{Rk,s}= 0,5* N_{Rk,s}= 0,5*As*fuk.$$

Wenn die Querlast jedoch über einen Hebelarm angelegt wird, muss ein "charakteristischer Widerstand bei Biegebeanspruchung" berücksichtigt werden. Nähere Einzelheiten hierzu und den entsprechenden Formeln zur Berechnung finden sich wiederum in der oben zitierten Zulassungs-Leitlinie ETAG 001. Der Versagensmechanismus in diesem Fall ist immer noch ein Stahlversagen, sodass der Widerstand immer noch als $V_{Rk,s}$ bezeichnet werden kann, allerdings ist er in diesem Fall üblicherweise wesentlich geringer als der Maximalwert 0,5*As*fuk.

Neben dem Stahlversagen mit und ohne Hebel gibt es im Falle der Querbeanspruchung ebenfalls weitere Versagensmechanismen, insbesondere den Betonausbruch auf der lastabgewandten Seite (das sogenannte Pryout-Versagen), und den Betonkantenbruch, der üblicherweise zu berücksichtigen ist, wenn der Anker um weniger als das Zehnfache seiner Einbautiefe oder weniger als das 60-fache seines Durchmessers von dem Rand des Befestigungsgrundes entfernt ist. Für jeden dieser Versagensmechanismen gibt es wiederum einen charakteristischen Widerstand, und der geringste Widerstand bildet den hier relevanten charakteristischen Widerstand $V_{Rk}$ bei Querbeanspruchung.

Der Erfinder hat verschiedene Versagensmechanismen von Ankern in Beton systematisch für den Fall untersucht, dass die Anker abweichend von der üblichen Praxis nicht senkrecht zur Oberfläche des Befestigungsgrundes eingebracht sind, sondern um einen Winkel $\alpha_{Anker}$ gegenüber der Flächennormalen zur Oberfläche des Befestigungsgrundes geneigt sind.

In der Praxis kommen oft Einbausituationen vor, bei denen entweder randnahe Ankergruppen mit Querlast beansprucht werden, wie z.B. bei der Befestigung von Balkongeländern und Brüstungen, oder bei denen Biegebeanspruchungen berücksichtigt werden müssen. Die unbefriedigenden Ergebnisse, die bei der Bemessungsdienstleistung für Kunden immer wieder zum Vorschein kommen, waren Anlass, über eine Möglichkeit nachzudenken, ob Ankergruppen besser ausgelastet werden können. Nach eingehender Analyse der Systematik der Bemessung nach ETAG_001 wurde erkannt, dass eine Verbesserung der Auslastung einer Ankergruppe über eine bessere Ausnutzung der Zugtragfähigkeit erreichbar ist. Um dies zu erreichen wurde erwogen, den Anker nicht grundsätzlich senkrecht zur Oberfläche der Befestigungsgrundes, sondern tendenziell in Richtung des resultierenden Lastanteils der von dem Einzelanker zu übertragenden Zug- und Querlastkomponente einzusetzen.

Über den Vergleich der Kegelflächen des Ausbruchkörpers eines geneigt verbauten Ankers mit gleicher senkrecht zur Oberfläche gemessenen Verankerungstiefe, gegenüber der Kegelfläche eines senkrecht gesetzten Ankers kann gezeigt werden, dass die Fläche des geneigten Ankers bis auf einen kleinen Winkelbereich mindestens gleich, mit ansteigenden Winkeln jedoch immer größer ist als die Ausbruchskegelfläche des senkrecht verbauten Ankers. Selbst die Begrenzung der Fläche durch einen Betonrand führt nicht zu kleineren Flächen. Diese Analogie untermauert die Annahme, dass ein geneigt verbauter Anker die gleiche Zugtragfähigkeit erreichen kann, wie ein senkrecht verbauter Anker. Mit darauf aufbauend durchgeführten Bauteilversuchen und FEM-Simulationen konnte eine bessere Auslastung der Anker bestätigt werden.

Der Erfinder hat festgestellt, dass es eine breite Klasse von Anwendungsfällen gibt, in denen die Tragfähigkeit gegenüber der Tragfähigkeit bei senkrechter Montage eines Ankers verbessert, teilweise sogar wesentlich verbessert werden kann, wenn der Winkel $\alpha_{Anker}$ erfindungsgemäß gewählt ist, d.h. wenn gilt $\alpha_{Anker} = k * \frac{3}{4} * \arctan(V_{Sd}/N_{Sd})$, mit $0,8 \leq k \leq 1,34$. Konkret wurden erhebliche Verbesserungen in der Tragfähigkeit für Anwendungsfälle festgestellt, in denen gilt $V_{Rk}/N_{Rk} \leq 1,1$, bei denen also der charakteristische Widerstand bei Querbeanspruchung $V_{Rk}$ kleiner oder nur unwesentlich größer ist als der charakteristische Widerstand $N_{Rk}$ bei Zugbeanspruchung. Je kleiner das Verhältnis $V_{Rk}/N_{Rk}$ wird, desto größer sind die Verbesserungen gegenüber der herkömmlichen senkrechten Montage. Verbesserungen lassen sich speziell regelmäßig dann gegenüber der senkrechten Montage erreichen, wenn die senkrecht zur Oberfläche gemessene Verankerungstiefe hef konstant gehalten wird, was bedeutet, dass der Anker um einen Faktor $1/\cos(\alpha_{Anker})$ länger gewählt werden muss, als bei der senkrechten Montage. Dies stellt praktisch jedoch keine Probleme dar, da ein etwas längerer Anker die Kosten kaum nennenswert erhöht. Viel problematischer ist es hingegen, wenn zum Einhalten der Bemessung Anker mit größerem Durchmesser gewählt werden müssen, die nicht nur spürbar teurer sind, sondern speziell in Randbereichen, in denen Bemessungsprobleme auftreten, oft nicht verwendet werden können, weil sie zu einem erhöhten Risiko eines Betonkantenabbruchs führen (was letztlich zu einem geringeren Wert für $V_{Rk}$ führt).

Das Verfahren betrifft jedoch nur Fälle, in denen der Bemessungswert für die Querlast einen wesentlichen Anteil an der Gesamtlast ausmacht, und konkret Fälle, bei denen gilt $V_{Sd}/N_{Sd} \geq 0,3$. Für geringere anteilige Querlasten ist der Zugewinn an Tragfähigkeit nicht vorhanden, oder nicht so wesentlich, dass er den zusätzlichen Aufwand einer geneigten Montage eher nicht rechtfertigt. Obwohl der Parameter k grundsätzlich in dem definierten Bereich gewählt werden kann, soll als zusätzliche Bedingung gelten, dass k stets ausreichend klein gewählt ist, dass gilt: $\alpha_{Anker} \leq 75°$, vorzugsweise $\leq 70°$, um die Montage nicht übermäßig zu erschweren.

Es gibt eine Reihe von typischen Situationen, in denen das Verhältnis $V_{Rk}/N_{Rk}$ klein wird, und speziell $\leq 1.1$ wird, und bei denen das Verfahren der Findung vorteilhafte Anwendung findet.

Ein typischer Anwendungsfall sind randnahe Befestigungen, bei denen die charakteristischen Widerstände der Querbelastung meist deutlich kleiner sind als die charakteristischen Widerstände für Zugbelastung, also $V_{Rk} < N_{Rk}$.

Ein weiterer typischer Anwendungsfall sind Befestigungen ohne Randeinfluss mit großen Setztiefen, bei denen das reine Stahlversagen als Bemessungsgrenze maßgebend wird, und demnach $V_{Rk,s} = 0,5* N_{Rk,s}$ in guter Ernährung gilt, sodass in jedem Fall $V_{Rk} < N_{Rk}$.

Auch eine Biegebeanspruchung kann die Tragfähigkeit stark reduzieren. Wie oben erwähnt, führt eine Biegebelastung mit Hebelarm zu einem verringerten Wert für $V_{Rk}$, und somit ebenfalls regelmäßig zu einer Situation mit $V_{Rk} < N_{Rk}$.

Biegebeanspruchungen auf den Anker müssen berücksichtigt werden, wenn eine nicht druckfeste Zwischenschicht zwischen dem Anbauteil und dem Befestigungsgrund vorliegt, oder ein Spalt oder Abstand zwischen Anbauteil und Befestigungsgrund vorhanden ist. Biegebeanspruchungen müssen ferner dann berücksichtigt werden, wenn das Anbauteil selbst nicht druckfest ist, also beispielsweise nicht aus Metall oder Beton besteht, sondern z.B. aus Holz. Schließlich spielen Biegebeanspruchungen regelmäßig eine Rolle, wenn das Lochspiel der Verbindung zu groß ist. Mit steigendem Abstand der Lasteinleitung in den Anker im Anbauteil zur Trennfuge zwischen Anbauteil und Befestigungsgrund steigt bei gleicher Einwirkung auf das Anbauteil die Biegebeanspruchung.

Durch den geneigten Einbau wird der Anker vereinfacht gesprochen stärker auf Zug belastet als ein senkrecht eingebrachter Anker unter derselben Lastsituation. Das erfindungsgemäße Verfahren sieht als Extremfall bei k = 1,33 die Situation vor, in der der Anker dieselbe Neigung zur Oberfläche des Befestigungsgrundes einnimmt, wie die Gesamtlast, also die Resultierende aus Querlast und Zuglast. In diesem Fall würde der Anker lediglich auf Zug belastet werden.

Die besten Resultate werden jedoch nach Berechnungen des Erfinders regelmäßig nicht dann erhalten, wenn die Längsachse Ankers parallel zur resultierenden Kraft ausgerichtet ist, sondern der Winkel $\alpha_{Anker}$ geringer gewählt ist als der Winkel der resultierenden Last bezogen auf die Flächennormale zur Oberfläche des Befestigungsgrundes. Daher ist im bevorzugten Ausführungsformen $k \leq 1,2$, vorzugsweise $k \leq 1,15$ und besonders vorzugsweise $k \leq 1,1$. Dies ist zumindest dann der Fall, wenn über die Trennfuge zwischen dem Anbauteil und dem Befestigungsgrund auch Pressungen übertragbar sind. In Einbaulagen mit $k \leq 1,2$ wird der Anker vorwiegend auf Zug (bezogen auf die Achse des Ankers, nicht bezogen auf die Flächennormale des Befestigungsgrundes), aber auch leicht mit Querkraft beansprucht. Die Querbelastung wird aber direkt durch das Anlegen des Ankers an die Bohrlochwandung im Anbauteil über Pressungen aufgenommen. Durch die Umlagerung der Reaktionskräfte wird dadurch das Anbauteil auf den Befestigungsgrund gepresst. In bevorzugten Ausführungsformen gilt daher: $k \leq 1,2$, vorzugsweise $k \leq 1,15$ und besonders vorzugsweise $k \leq 1,1$. In einer vorteilhaften Ausführungsform ist der mindestens eine Anker durch eine Bohrung in dem Anbauteil geführt, wobei der Durchmesser der Bohrung den Durchmesser des Ankers in einem Abschnitt, in dem er im montierten Zustand in der Bohrung aufgenommen ist, um weniger als 22%, vorzugweise weniger als 12 % übersteigt. Bei einem so geringen Spiel des Ankers in der Bohrung des Anbauteils kann die Querbelastung wirksam über Pressungen aufgenommen werden.

Anders zu bewerten ist der Fall, bei dem zwischen dem Anbauteil und dem Befestigungsgrund ein Zwischenraum vorhanden ist, in dem sich ein nicht-druckfestes Material befindet. Ein Beispiel für ein nicht-druckfestes Material könnte beispielsweise eine nicht-druckfeste Putzschicht, Holz, eine Dämmschicht oder auch einfach Luft sein. In diesem Fall ist der Parameter k vorzugsweise größer gewählt, sodass gilt: $k \geq 1,1$, vorzugsweise $k \geq 1,2$ und besonders vorzugsweise $k \geq 1,25$. Der Idealfall kann in der Wahl $k = 1,33$ bestehen, gemäß der der Anker parallel zur Richtung der Gesamtlast ausgerichtet ist, sodass der Anker lediglich auf Zug (bezogen auf seine eigene Achse, nicht auf die Oberfläche des Befestigungsgrundes!) belastet wird.

Obwohl die oben beschriebene Beziehung spezielle Neigungswinkel $\alpha_{Anker}$ definiert, die eine besonders ausgeprägte Erhöhung der Tragfähigkeit versprechen, ist es in der Praxis nicht notwendig, speziell für jede Anwendung den passenden Winkel individuell zu berechnen. Stattdessen lassen sich erhebliche Fortschritte gegenüber dem gängigen Verfahren bereits dann erzielen, wenn alternativ zu der senkrechten Montage lediglich ein möglicher alternativer Standard-Montagewinkel $\alpha_{Anker}$ berücksichtigt wird, der also eine Alternative zu dem gegenwärtig einzig gültigen Montagewinkel von 0° darstellt. Nach Untersuchungen des Erfinders sollte dieser alternative Standard-Montagewinkel $\alpha_{Anker}$ zwischen 35° und 55°, vorzugsweise von zwischen 40° und 50°, und besonders vorzugsweise von etwa 45° zur Senkrechten zur Oberfläche des Befestigungsgrundes betragen, weil dadurch bereits in einer großen Zahl von Anwendungsfällen eine erhebliche Verbesserung erreicht werden kann. In dieser vereinfachten Ausführung des Verfahrens wird der alternative Standard-Montagewinkel zumindest dann in Betracht gezogen, wenn für das Verhältnis $V_{Sd}/N_{Sd}$ des Bemessungswerts der Querbelastung $V_{Sd}$ und des Bemessungswerts der Zugbelastung $N_{Sd}$ mindestens eines Ankers in der Ankergruppe gilt: $V_{Sd}/N_{Sd} \geq 0,8$ und vorzugsweise $V_{Sd}/N_{Sd} \geq 1,0$, und wenn für diesen Anker die charakteristischen Widerstände bei Querbeanspruchung $V_{Rk}$ bzw. bei Zugbeanspruchung $N_{Rk}$ die folgende Beziehung erfüllen: $V_{Rk}/N_{Rk} \leq 1,1$. Durch die Beschränkung auf diesen einen alternativen Standard-Montagewinkel wird das Verfahren sowohl hinsichtlich der Montage, als auch der Bemessung wesentlich vereinfacht. Gleichzeitig kann mit diesem alternativen Standard-Montagewinkel in vielen Fällen die Tragfähigkeit bereits erheblich erhöht werden.

Der Erfinder hat speziell zu einem Montagewinkel von 45° Auszugsversuche durchgeführt und festgestellt, dass damit erhebliche Verbesserungen erreicht werden können, sowohl für den Fall einer resultierenden Last in diesem 45° Winkel (d.h $V_{Sd} = N_{Sd}$), als auch für den Fall einer reinen Querkraft ($N_{Sd} = 0$). Speziell in dem Fall einer randnahen Montage konnte der Widerstand im Hinblick auf den Fall einer reinen Querkraft um einen Faktor von drei gesteigert werden verglichen mit einem senkrecht montierten Anker mit derselben effektiven Verankerungstiefe hef, d.h gemessen senkrecht zur Oberfläche des Befestigungsgrundes. Für eine Kraft, die ebenfalls in einem 45° Winkel zur Flächennormalen steht (d.h $V_{Sd} = N_{Sd}$), konnte die Versagenslast sogar um einen Faktor vier gesteigert werden. Bemerkenswert ist dabei, dass die Zugfestigkeit senkrecht zur Betonoberfläche - wiederum bei gleicher effektiver Verankerungstiefe - vergleichbar war wie bei der senkrechten Montage. Um dieselbe effektive Verankerungstiefe hef zu erreichen, muss der unter einem Winkel von 45° gesetzte Anker um einen Faktor von 1,41 länger sein, als der senkrecht gesetzte Anker. Die erheblichen Zuwächse in der Tragfähigkeit sind aber keinesfalls nur auf die größere Ankerlänge zurückzuführen. Stattdessen zeigen die Zugexperimente, dass auch bei gleicher Länge des Ankers eine Montage unter einem Winkel von 45° zur Flächennormalen regelmäßig zu erheblichen Verbesserungen hinsichtlich der Tragfähigkeit führt, solange die Querbelastung $V_{Sd}$ ähnlich oder größer ist als die Zugbelastung $N_{Sd}$, die dem Anker zuzurechnen ist.

Im Rahmen des vereinfachten Verfahrens könnte regelmäßig dann, wenn zu vermuten ist, dass die geneigte Montage mit dem alternativen Standard-Montagewinkel eine Verbesserung gegenüber der senkrechten Montage mit sich bringen könnte, in einer Bemessungs-Rechnung geprüft werden, ob sich die Tragfähigkeiten erhöhen, und gegebenenfalls um wie viel, um zu entscheiden, ob von diesem alternativen Standard-Montagewinkel Gebrauch gemacht werden soll. In vorteilhaften Ausführungsformen würde dieser alternative Standard-Montagewinkel automatisch mitberücksichtigt werden und dem Nutzer vorgeschlagen werden.

In bevorzugten Ausführungsformen erfüllen die charakteristischen Widerstände bei Querbeanspruchung $V_{Rk}$ bzw. bei Zugbeanspruchung $N_{Rk}$ die folgenden Beziehung: $V_{Rk}/N_{Rk} \leq 1,0$, vorzugsweise $\leq 0,8$, und besonders vorzugsweise $\leq 0,6$.

Bei Ankergruppen, das heißt Anbauteilen die mit mehreren Ankern befestigt werden, kann die Lastübertragung auch insofern verteilt werden, dass ein Teil der Anker erfindungsgemäß geneigt, die anderen senkrecht angeordnet werden. Durch geeignete Wahl der Größe der Durchgangsbohrungen in dem Anbauteil kann dabei die Zugbelastung den senkrecht angeordneten Ankern und die Querbelastung den geneigt angeordneten Ankern zugewiesen werden. Dadurch kann bei Ankergruppen eine weitere Optimierung der Verbindung erreicht werden.

Beispielsweise kann der genannte Anker, der unter dem oben definierten Winkel $\alpha_{Anker}$ eingesetzt ist, ein randnäherer Anker innerhalb der Ankergruppe sein, und die Ankergruppe einen randferneren Anker enthalten, der senkrecht zur Oberfläche des Befestigungsgrundes eingesetzt wird. Dahinter steht die Überlegung, dass nach den gültigen Bemessungsvorschriften ein randnaher Anker geeignet sein muss, die vollständige Querbelastung zu tragen, und der charakteristische Widerstand bei Querbeanspruchung $V_{Rk}$ in randnahen Bereichen geringer ist, als in randfernen Bereichen. Da der mit dem Winkel $\alpha_{Anker}$ geneigte Anker einen wesentlich größeren Widerstand gegenüber Querbelastungen aufbringt, kann dieses Kriterium im Rahmen der Erfindung leichter erfüllt werden, als im Stand der Technik.

Hingegen sind die Anforderungen an den charakteristischen Widerstand bei Querbeanspruchung $V_{Rk}$ an den randfernen Anker weniger gering, sodass dieser wie gewohnt senkrecht eingesetzt werden kann. In der vorliegenden Offenbarung wird ein Anker als "randnah" bezeichnet, wenn er um weniger als das zehnfache der effektiven, d.h. senkrechten Verankerungstiefe hef, vorzugsweise um weniger als das fünffache der effektiven Fertigungstiefe von dem Rand des Befestigungsgrundes entfernt ist.

In einer vorteilhaften Weiterbildung ist der genannte Anker, der unter dem oben definierten Winkel $\alpha_{Anker}$ eingesetzt ist, ein randfernerer Anker innerhalb der Ankergruppe, und enthält die Ankergruppe einen randnäheren Anker, der in einem Langloch in dem Anbauteil untergebracht ist und senkrecht zur Oberfläche des Befestigungsgrundes eingesetzt wird. Als "Langloch" wird im Rahmen der vorliegenden Offenbarung ein Loch verstanden, das ausreichend groß bemessen ist, dass davon ausgegangen werden kann, dass ein darin aufgenommener Anker keine nennenswerte Querlast erfährt. Dies kann ein Langloch im engeren Sinne eines länglichen Loches, aber auch ein rundes Loch mit ausreichend großem Durchmesser sein. In dieser Ausführungsform ist der randnahe Anker somit senkrecht eingesetzt, und daher weniger geeignet, Querlasten zu widerstehen. Da dieser randnahe Anker jedoch in einem Langloch untergebracht ist, erfährt er lediglich Zugkräfte, nicht aber Querkräfte, und deshalb sind letztere bei der Bemessung nicht zu berücksichtigen. Der randferne Anker hat entsprechend höhere Querkräfte zu tragen. Hierfür ist aber gerade die geneigte Montage vorteilhaft.

Das vorstehend beschriebene Verfahren ist auf beliebige Anker anwendbar, von denen einige bevorzugte im folgenden kurz erwähnt werden sollen. Im einfachsten Fall kann der mindestens eine Anker durch einen einteiligen Anker gebildet wird, der folgendes umfasst:

- eine Lasteinleitungsbereich, der im Bereich eines führenden Endes des Ankers angeordnet ist und geeignet ist, eine Last in den Befestigungsgrund einzuleiten,
- einen Schaftabschnitt,
- einen Abschnitt oder ein Element, um den Anker im Bereich eines nachlaufenden Endes an dem Anbauteil festzulegen, und
- einen Kraftantrieb, um den Anker zu setzen.

Dabei kann der einteilige Anker beispielsweise durch eine herkömmliche Betonschraube gebildet sein. In diesem Fall wird der Lasteinleitung Bereich durch ein Betongewinde gebildet, der Kraftantrieb durch einen Schraubenkopf gebildet und der Abschnitt zum Festlegen des Ankers am Anbauteil ebenfalls durch den Schraubenkopf gebildet sein. Der einteilige Anker kann aber auch durch einen Spreizanker oder Hinterschnittanker gebildet sein.

In anderen Ausführungsformen wird der mindestens eine Anker durch ein zweiteiliges System gebildet, welches eine Ankerhülse und ein Spannelement umfasst,

wobei die Ankerhülse geeignet ist, eine Last in den Befestigungsgrund einzuleiten und ein Innengewinde aufweist, und wobei das Spannelement

- einen Schaftabschnitt aufweist, der im Bereich seines führenden Endes ein Außengewinde hat, mit dem er in das Innengewinde der Ankerhülse geschraubt werden kann, um eine Last zu übertragen,
- einen Abschnitt oder ein Element umfasst, um den Schaftabschnitt des Spannelements im Bereich eines nachlaufenden Endes an dem Anbauteil festzulegen, und
- einen Kraftantrieb aufweist, um das Spannelement in die Ankerhülse zu schrauben.

Dabei kann der genannte Abschnitt zum Festlegen des Ankers bzw. des Spannelements an dem Anbauteil durch einen Schraubenkopf gebildet sein, der gleichzeitig den genannten Kraftantrieb bildet.

Alternativ wird der mindestens eine Anker durch ein zweiteiliges System gebildet wird, welches eine Ankerhülse und ein Spannelement umfasst,

wobei die Ankerhülse geeignet ist, eine Last in den Befestigungsgrund einzuleiten, und wobei das Spannelement

- einen Schaftabschnitt aufweist, der im Bereich seines führenden Endes ein Anschlagselement, insbesondere einen Schraubenkopf oder eine aufgeschraubte Mutter hat, an dem die Ankerhülse anschlagen kann, um eine Last zu übertragen, und
- einen Abschnitt oder ein Element umfasst, um den Schaftabschnitt des Spannelements im Bereich eines nachlaufenden Endes an dem Anbauteil festzulegen.

Der Vorteil dieser Ausführungsform besteht darin, dass die Ankerhülse nicht extra mit einem Innengewinde versehen sein muss, was die Herstellungskosten verringert.

Vorzugsweise ist an dem nachlaufenden Ende des Ankers bzw. des Spannelementes ein Gewinde vorgesehen, und wird das genannte Element zum Festlegen des Ankers bzw. Spannelementes durch eine Mutter gebildet, die auf dem Gewinde gegen das Anbauteil geschraubt werden kann.

In einer alternativen Ausführungsform wird Anker durch ein mehrteiliges System gebildet, das folgendes umfasst:

eine erste Ankerhülse, die geeignet ist, eine Last in den Befestigungsgrund einzuleiten,
eine zweite Ankerhülse, die geeignet ist, eine Last in das Anbauteil einzuleiten, und
ein längliches Spannelement, welches geeignet ist, durch die zweite Ankerhülse hindurchgeführt und in die erste Ankerhülse eingeführt oder durch diese durchgeführt zu werden, und das geeignet ist, die erste und die zweite Ankerhülse axial derart zu verspannen, dass die erste und die zweite Ankerhülse gegensinnige Verbundspannungen in dem Befestigungsgrund bzw. anbauteil bilden.

Hier soll die Angabe, dass das längliche Spannelement geeignet ist, durch die beiden Ankerhülsen "hindurchgeführt zu werden", nicht suggerieren, dass die Ankerhülsen notwendigerweise vor dem Spannelement eingesetzt werden. Auch in dieser Ausführungsform ist es vielmehr möglich, dass das Spannelement im Bereich seines führenden Endes ein Anschlagelement, insbesondere einen Schraubenkopf oder eine aufgeschraubte Mutter hat, an dem die Ankerhülse anschlagen kann, um eine Last zu übertragen. In diesem Fall wird das längliche Spannelement zuerst in das Bohrloch eingeführt, und die Ankerhülsen werden nachfolgend auf das Spannelement aufgesetzt bzw. "aufgefädelt" und über das längliche Spannelement hinweg gleitend in das Bohrloch eingebracht, wobei das längliche Spannelement, obwohl es selbst in Ruhe ist, durch die Ankerhülsen "hindurchgeführt wird".

Ein weiterer Aspekt der Erfindung betrifft Computerprogrammprodukt, umfassend eine Mehrzahl von Instruktionen, die bei Ausführung auf einem Computersystem folgende Schritte ausführen: Ausgeben eines Graphical User Interface (GUI) über eine Anzeigeeinrichtung,

wobei das GUI Eingabefelder hat, die es einen Nutzer gestatten, Information bezüglich einer geplanten Befestigung eines Anbauteils auf einem Befestigungsgrund aus Beton oder Mauerwerk mit einer Gruppe von Ankern einzugeben, wobei diese Information zumindest einen Bemessungswert der Querbelastung $V_{Sd}$ und einen Bemessungswert der Zugbelastung $N_{Sd}$ zumindest eines Ankers in der Ankergruppe repräsentiert, oder diese Bemessungswerte $V_{Sd}$ und $N_{Sd}$ aus dieser Information ableitbar sind,

wobei das GUI ferner dazu eingerichtet ist anzuzeigen, ob die geplante Befestigung vorgegebenen Bemessungsvorschriften entspricht,

wobei das Computerprogramm dazu eingerichtet ist, zumindest in Fällen, in denen

- für das Verhältnis $V_{Sd}/N_{Sd}$ des Bemessungswerts der Querbelastung $V_{Sd}$ und des Bemessungswerts der Zugbelastung $N_{Sd}$ eines Ankers in der Ankergruppe gilt: $V_{Sd}/N_{Sd} \geq 0,3$, vorzugsweise $V_{Sd}/N_{Sd} \geq 0,6$ und besonders vorzugsweise $V_{Sd}/N_{Sd} \geq 1,0$, und
- in denen die charakteristischen Widerstände bei Querbeanspruchung $V_{Rk}$ bzw. bei Zugbeanspruchung $N_{Rk}$ dieses Ankers die folgende Beziehung erfüllen: $V_{Rk}/N_{Rk} \leq 1,1$,

eine Berechnung der Bemessung dieses Ankers der Ankergruppe für eine Montage mit einem Winkel $\alpha_{Anker}$ zur Senkrechten zur Oberfläche des Befestigungsgrundes durchzuführen, für den gilt:

$$\alpha_{Anker} = k * \tfrac{3}{4} * \arctan(V_{Sd}/N_{Sd}) \quad \text{für} \quad N_{Sd} > 0,$$

und

$$\alpha_{Anker} = k * 67,5° \quad \text{für} \quad N_{Sd} = 0,$$

mit : $0,8 \leq k \leq 1,34$, unter der Maßgabe, dass $\alpha_{Anker} \leq 75°$, wobei

$\alpha_{Anker}$ der Neigungswinkel des Ankers gegenüber der Senkrechten zur Oberfläche des Befestigungsgrundes ist, wobei der Neigungswinkel $\alpha_{Anker}$ in der Ebene zu messen ist, in der die der Bemessung zugrundeliegende Querlast $V_{Sd}$ liegt, und das Ergebnis der Bemessung auszugeben.

9

Alternativ kann ein Computerprogrammprodukt vorgesehen sein, welches auf das oben bezeichnete vereinfachte Verfahren gerichtet ist, in dem zusätzlich zu der üblichen Montage der Anker unter 0° ein alternativer Standard-Montagewinkel berücksichtigt wird. Dieses Computerprogramm umfasst eine Mehrzahl von Instruktionen, die bei Ausführung auf einem Computersystem folgende Schritte ausführen:

Ausgeben eines Graphical User Interface (GUI) über eine Anzeigeeinrichtung, wobei das GUI Eingabefelder hat, die es einen Nutzer gestatten, Information bezüglich einer geplanten Befestigung eines Anbauteils auf einem Befestigungsgrund aus Beton oder Mauerwerk mit einer Gruppe von Ankern einzugeben, wobei diese Information zumindest einen Bemessungswert der Querbelastung $V_{Sd}$ und einen Bemessungswert der Zugbelastung $N_{Sd}$ zumindest eines Ankers in der Ankergruppe repräsentiert, oder diese Bemessungswerte $V_{Sd}$ und $N_{Sd}$ aus dieser Information ableitbar sind,

wobei das GUI ferner dazu eingerichtet ist anzuzeigen, ob die geplante Befestigung vorgegebenen Bemessungsvorschriften entspricht,

wobei das Computerprogramm dazu eingerichtet ist, eine Berechnung der Bemessung dieses Ankers der Ankergruppe für eine Montage mit einem Winkel $\alpha_{Anker}$ zur Senkrechten zur Oberfläche des Befestigungsgrundes durchzuführen, für den gilt $35° \leq \alpha_{Anker} \leq 55°$, vorzugsweise $40° \leq \alpha_{Anker} \leq 50°$, besonders vorzugsweise $43° \leq \alpha_{Anker} \leq 48$,

wobei der Neigungswinkel $\alpha_{Anker}$ in der Ebene zu messen ist, in der die der Bemessung zugrundeliegende Querlast $V_{Sd}$ liegt, und das Ergebnis der Bemessung auszugeben. In dieser vereinfachten Ausführungsform ist der Winkel $\alpha_{Anker}$ ein vorbestimmter Winkel, der nicht in Abhängigkeit von den tatsächlich vorliegenden Bemessungswerten der Querbelastung $V_{Sd}$ und der Zugbelastung $N_{Sd}$ individuell berechnet werden muss.

In der vorteilhaften Ausführungsform gestatten die Eingabefelder des GUI es dem Nutzer, Informationen bezüglich einer oder mehrerer der folgenden Merkmale einzugeben: Art bzw. Beschaffenheit des Befestigungsgrundes; Art, Größe, Form, Material eine Ankerplatte, Bemessungswerte bezüglich Zugkraft, Querkraft, Torsionsmoment, und/oder Biegemoment, Art und/oder Abmessung des Ankers.

In einer vorteilhaften Weiterbildung ist das Computerprogrammprodukt dazu eingerichtet, zunächst eine Bemessung für einen senkrecht zum Befestigungsgrund gesetzten Anker zu berechnen, und für den Fall, dass dieser die Bemessungsvorschriften nicht erfüllt, alternativ eine geneigte Montage, die die Bemessungsvorschriften erfüllt, vorzuschlagen.

Ein weiterer Aspekt Erfindung betrifft ein Verfahren zum Bemessen einer Befestigung von Anbauteilen auf einem Befestigungsgrund, der durch Beton oder Mauerwerk gebildet wird, mit einer Gruppe von Ankern,

wobei für das Verhältnis $V_{Sd}/N_{Sd}$ des Bemessungswerts der Querbelastung $V_{Sd}$ und des Bemessungswerts der Zugbelastung $N_{Sd}$ mindestens eines Ankers in der Ankergruppe gilt: $V_{Sd}/N_{Sd} \geq 0,3$, vorzugsweise $V_{Sd}/N_{Sd} \geq 0,6$ und besonders vorzugsweise $V_{Sd}/N_{Sd} \geq 1,0$,

und wobei für diesen Anker die charakteristischen Widerstände bei Querbeanspruchung $V_{Rk}$ bzw. bei Zugbeanspruchung $N_{Rk}$ die folgende Beziehung erfüllen: $V_{Rk}/N_{Rk} \leq 1,1$. Dabei wird für diesen

Anker geprüft, ob der Bemessungswert der Lasteinwirkung den Bemessungswert der Widerstände dieses Ankers gegenüber mindestens einem Versagensmechanismus übersteigt, für den Fall, dass dieser Anker mit einem Winkel $\alpha_{Anker}$ zur Senkrechten zur Oberfläche des Befestigungsgrundes derart geneigt eingesetzt ist, dass gilt:

$$\alpha_{Anker} = k * \tfrac{3}{4} * \arctan(V_{Sd}/N_{Sd}) \text{ für } \quad N_{Sd} > 0,$$

und

$$\alpha_{Anker} = k * 67,5° \qquad \text{für} \quad N_{Sd} = 0,$$

mit: $0,6 \leq k \leq 1,34$, vorzugsweise $0,8 \leq k \leq 1,34$, unter der Maßgabe, dass $\alpha_{Anker} \leq 75°$, wobei der Neigungswinkel $\alpha_{Anker}$ in der Ebene zu messen ist, in der die der Bemessung zugrundeliegende Querlast $V_{Sd}$ liegt.

In vorteilhaften Ausführungsformen dieses Bemessungsverfahrens gilt: $k \leq 1,2$, vorzugsweise $k \leq 1,15$ und besonders vorzugsweise $k \leq 1,1$. Zusätzlich oder alternativ gilt ferner $k \geq 0,85$, vorzugsweise $k \geq 0,9$.

Ein weiterer Aspekt betrifft ein alternatives, vereinfachtes Verfahren zum Bemessen einer Befestigung von Anbauteilen (10) auf einem Befestigungsgrund (12)), der durch Beton oder Mauerwerkgebildet wird, mit einer Gruppe von Ankern (14),

wobei für das Verhältnis $V_{Sd}/N_{Sd}$ des Bemessungswerts der Querbelastung $V_{Sd}$ und des Bemessungswerts der Zugbelastung $N_{Sd}$ mindestens eines Ankers (14) in der Ankergruppe gilt: $V_{Sd}/N_{Sd} \geq 0,8$ und vorzugsweise $V_{Sd}/N_{Sd} \geq 1,0$,

und wobei für diesen Anker die charakteristischen Widerstände bei Querbeanspruchung $V_{Rk}$ bzw. bei Zugbeanspruchung $N_{Rk}$ die folgende Beziehung erfüllen: $V_{Rk}/N_{Rk} \leq 1,1$. Gemäß diesem vereinfachten Bemessungsverfahren wird

für diesen Anker (14) geprüft, ob der Bemessungswert der Lasteinwirkung den Bemessungswert der Widerstände dieses Ankers gegenüber mindestens einem Versagensmechanismus übersteigt, für den Fall, dass dieser Anker(14) mit mit einem Winkel $\alpha_{Anker}$ von zwischen 35° und 55°, vorzugsweise von zwischen 40° und 50°, und besonders vorzugsweise von etwa 45° zur Senkrechten zur Oberfläche des Befestigungsgrundes (12) geneigt eingesetzt ist, wobei der Neigungswinkel $\alpha_{Anker}$ in der Ebene zu messen ist, in der die der Bemessung zugrundeliegende Querlast $V_{Sd}$ liegt.

In bevorzugten Ausführungsformen dieser Bemessungsverfahren erfüllen die charakteristischen Widerstände bei Querbeanspruchung $V_{Rk}$ bzw. bei Zugbeanspruchung $N_{Rk}$ die folgende Beziehung: $V_{Rk}/N_{Rk} \leq 1,0$, vorzugsweise $\leq 0,8$, und besonders vorzugsweise $\leq 0,6$.

Vorzugsweise ist in der zu bemessenden Befestigung der mindestens eine Anker durch eine Bohrung in dem Anbauteil geführt, wobei der Durchmesser der Bohrung den Durchmesser des Ankers in einem Abschnitt, in dem er im montierten Zustand in der Bohrung aufgenommen ist, um weniger als 22%, vorzugweise weniger als 12 % übersteigt.

Vorzugsweise ist in der zu bemessenden Befestigung der genannte Anker ein randnäherer Anker innerhalb der Ankergruppe, und enthält die Ankergruppe einen randferneren Anker, der senkrecht zur Oberfläche des Befestigungsgrundes eingesetzt wird.

Vorzugsweise ist in der zu bemessenden Befestigung der genannte Anker ein randfernerer Anker innerhalb der Ankergruppe, und enthält die Ankergruppe einen randnäheren Anker, der in einem Langloch in dem Anbauteil untergebracht ist und senkrecht zur Oberfläche des Befestigungsgrundes eingesetzt wird. Man beachte, dass in der vorliegenden Offenbarung ein Anker insbesondere als "randnahe" betrachtet wird, wenn

Vorzugsweise ist bei der zu bemessenden Befestigung zwischen dem Anbauteil und dem Befestigungsgrund ein Zwischenraum vorhanden ist, in dem sich ein nicht-druckfestes Material befindet, und bei dem gilt: $k \geq 1,1$, vorzugsweise $k \geq 1,2$ und besonders vorzugsweise $k \geq 1,25$.

Ein Verfahren zum Befestigung von Anbauteilen auf einem Befestigungsgrund nach einer der vorstehend beschriebenen Ausführungsformen kann dabei ein Verfahren zum Bemessen dieser Befestigung nach einer der vorstehend beschriebenen Ausführungsformen des Bemessungsverfahrens enthalten. Dabei kann die Bemessung insbesondere mithilfe eines Computerprogramms nach einem der oben beschriebenen Ausführungsformen durchgeführt werden.

KURZBESCHREIBUNG DER FIGUREN

Fig. 1    zeigt eine schematische Schnittansicht, die eine Befestigung eines Anbauteils mit Hilfe von zwei geneigten Ankern aus Beton darstellt.

Fig. 2    zeigt eine Schnittansicht einer Befestigung eines Anbauteils in einem randnahen Bereich an Beton, mit zwei senkrecht gesetzten Ankern.

Fig. 3    zeigt dieselbe Situation wie Fig. 2, bei der der randnähere Anker erfindungsgemäß gegenüber der Flächennormalen geneigt gesetzt ist.

Fig. 4    zeigt dieselbe Situation wie Fig. 2, bei der der randnähere Anker in einem Langloch im Anbauteil angeordnet ist und der randfernere Anker zur Flächennormalen geneigt gesetzt ist.

Fig. 5    zeigt eine Befestigung eines Anbauteils mit Hilfe von zwei geneigten Ankern, die lediglich auf Zug belastet sind.

Fig. 6    zeigt einen Screenshot eines GUI eines Computerprogramms, welches geeignet ist, Bemessungen entsprechend dem erfindungsgemäßen Verfahren durchzuführen.

Fig. 7-11     zeigen verschiedene Anker, die im Verfahren gemäß Ausführungsformen der Erfindung verwendet werden können.

BESCHREIBUNG DER BEVORZUGTEN AUSFÜHRUNGSFORMEN

Weitere Vorteile und Merkmale der Erfindung ergeben sich aus der folgenden Beschreibung, in der die Erfindung anhand eines Ausführungsbeispiels unter Bezugnahme auf die beigefügten Zeichnungen beschrieben wird.

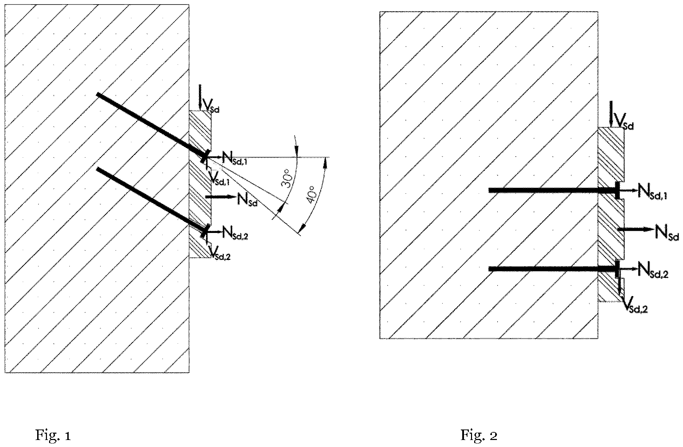

Fig. 1 zeigt eine Schnittansicht einer Befestigung eines Anbauteils 10 an einem Befestigungsgrund 12 aus Beton mit Hilfe von zwei Ankern 14, die in der gezeigten Ausführungsform durch schematisch dargestellte Betonschrauben gebildet sind. In dem Ausführungsbeispiel von Fig. 1 wird das Anbauteil 10 durch eine Metallplatte gebildet, wie sie beispielsweise zur Befestigung eines Balkongitters oder Ähnlichem verwendet werden könnte. Die Erfindung ist aber nicht auf bestimmte Anbauteile beschränkt. Stattdessen können beliebige Anbauteile 10, insbesondere solche aus Beton, an dem Befestigungsgrund 12 befestigt werden.

Auf das Anbauteil 10 wirkt eine Querbelastung mit einem Bemessungswert $V_{Sd}$ und eine Zugbelastung $N_{Sd}$, die sich gleichmäßig auf die entsprechenden Belastungen $V_{Sd, 1}$, $N_{Sd, 1}$ in Bezug auf den oberen Anker und $V_{Sd, 2}$, $N_{Sd, 2}$ in Bezug auf den unteren Anker verteilen, d.h. es gilt: $V_{Sd, 1} = V_{Sd,2} = ½ V_{Sd}$, $N_{Sd, 1} = N_{Sd, 2} = ½ N_{Sd}$. Die resultierende bzw. Gesamtlast ist unter einem Winkel von arctan $(V_{Sd}/N_{Sd}) = 40°$ zur Flächennormalen geneigt.

In dem Ausführungsbeispiel von Fig. 1 sind die Anker 14 nicht, wie im Stand der Technik üblich, senkrecht zur Oberfläche des Befestigungsgrundes 12 gesetzt. Stattdessen sind sie unter einem Winkel $\alpha_{Anker}$ von 30°, also ¾ des Winkels der tatsächlich resultierenden Last gesetzt. Dadurch kann eine wesentlich höhere Last getragen werden als bei einer senkrechten Montage. In Fig. 1 ist ferner die effektive Einbautiefe hef eingezeichnet. Die effektive Einbautiefe hef entspricht in diesem Fall nicht der Länge des Ankers 14, sondern der senkrechten Projektion derselben, oder mit anderen Worten, die Länge des Ankers 14 multipliziert mit $\cos(\alpha_{Anker})$.

Fig. 2 zeigt eine Querschnittsansicht einer Befestigung eines Anbauteils 10 mit Hilfe von zwei Ankern 14 in einem randnahen Bereich eines Befestigungsgrundes 12 aus Beton. In diesem Fall muss nach den gültigen Bemessungsvorschriften der randnahe Anker dazu ausgelegt sein, die gesamte Querbelastung entsprechend dem Bemessungswert der Querbelastung $V_{Sd}$ zu tragen, d.h. es gilt $V_{Sd,2} = V_{Sd}$. Dies ist in der Praxis mitunter schwierig zu erreichen, weil geringe Randabstände den charakteristischen Widerstand bei Querbeanspruchung $V_{Rk}$ verringern.

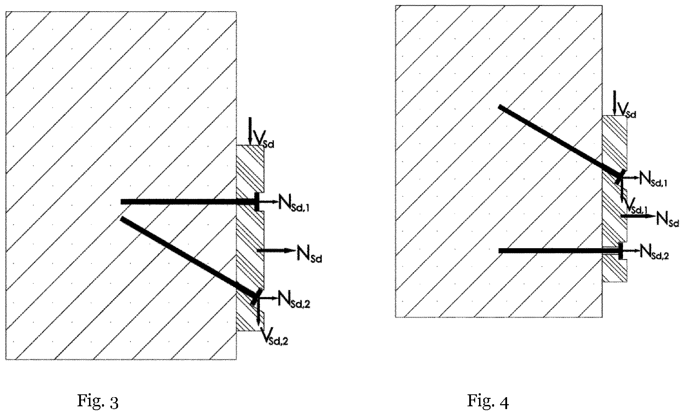

Eine Lösung für diese Schwierigkeiten ist in Fig. 3 gezeigt, bei der in der sonst gleichen Situation der randnahe Anker unter einem Winkel von $\alpha_{Anker} = ¾ * arctan (V_{Sd,2}/N_{Sd})$ eingesetzt ist, der aber dieselbe Setztiefe bezogen auf die Oberfläche des Befestigungsgrundes 12 hat, wie der senkrecht gesetzte Anker 14 von Fig. 2. Da bei der Bemessung auf den randfernen Anker in diesem Fall keine Querkräfte entfallen, spricht nichts dagegen, diesen wie in Fig. 3 gezeigt, auf die übliche Weise senkrecht zu setzen.

Fig. 4 zeigt eine alternative Variante, die Situation von Fig. 2 zu lösen. In dieser Variante ist der randnahe Anker 14 in einem Langloch 16 untergebracht, so dass bei der Bemessung auf diesen Anker kein Anteil der Querbelastung $V_{Sd}$ entfällt, während sich die Zugbelastungen gleichmäßig verteilen, d.h. $N_{Sd,2} = N_{Sd,2} = ½ * N_{Sd}$. Der schräg gesetzte randferne Anker 14 in Fig. 4 weist gegenüber dieser vergleichsweise hohen Querbelastung $V_{Sd,1} = V_{Sd}$ eine verbesserte Tragfähigkeit auf, als ein senkrecht gesetzter Anker.

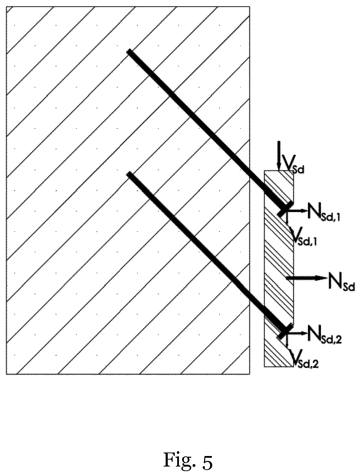

Schließlich zeigt Fig. 5 eine Variante, bei der zwischen dem Anbauteil 10 und dem Befestigungsgrund 12 kein druckfestes Material vorhanden ist. In Fig. 5 ist ein Zwischenraum gezeigt, der in der Praxis aber durch ein nicht-druckfestes Material, wie beispielsweise ein Dämmmaterial oder einen nicht-druckfesten Putz gebildet sein kann. In der Anordnung von Fig. 5 teilen sich die Bemessungswerte der Querbelastung $V_{Sd}$ bzw. Zugbelastung $N_{Sd}$ gleichmäßig auf die einzelnen Anker 14 auf, d.h. es gilt $V_{Sd, 1} = V_{Sd, 2} = ½ * V_{Sd}$, und $N_{Sd, 1} = N_{Sd, 2} = ½ * N_{Sd}$. In dieser Ausführungsform ist $\alpha_{Anker}$ so gewählt, dass er arctan $(V_{Sd}/N_{Sd})$ entspricht, d.h. die Anker 14 sind jeweils parallel zu der resultierenden Kraft angeordnet, und werden somit lediglich auf Zug (bezogen auf ihre eigene Längsachse) belastet. Dies entspricht in der allgemeinen Darstellung für den Winkel $\alpha_{Anker}$ den Fall k = 1,33.

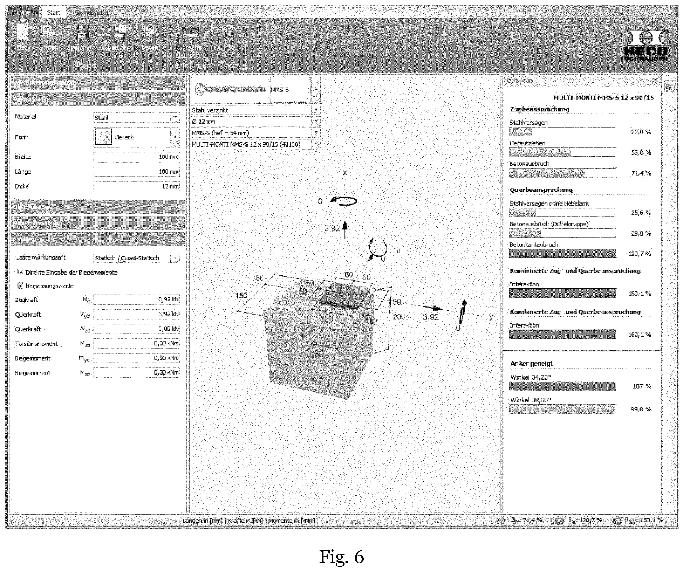

Ein weiterer Aspekt der vorliegenden Erfindung betrifft ein Computerprogrammprodukt, das eine Mehrzahl von Instruktionen enthält, die bei Ausführung auf einem Computersystem ein GUI über eine Anzeigeeinrichtung ausgeben, wie es beispielhaft in Fig. 6 gezeigt ist. Derartige Computerprogramme sind grundsätzlich bekannt und üblich und helfen dem Nutzer festzustellen, ob eine geplante Anwendung, in diesem Fall eine Befestigung eines Anbauteils 10 an einem Befestigungsgrund 12 aus Beton den Bemessungsvorschriften entspricht. Zu diesem Zweck enthält das GUI Eingabefelder, die es dem Nutzer gestatten, Informationen bezüglich einer Vielzahl von Merkmalen einzugeben, beispielsweise ein Feld 20 zum Spezifizieren des Befestigungsgrundes (in diesem Fall Beton), ein Feld 22 zur Eingabe von Informationen in Bezug auf die Art, Größe, Form und Material einer Ankerplatte, Felder 24 zur Eingabe von Bemessungswerten der Lasten, insbesondere Zugkraft, Querkraft, Torsionsmoment und Biegemoment, sowie ein Feld 26 zur Spezifizierung der Art und der Abmessung des Ankers 14.

Auf der rechten Seite des GUI von Fig. 6 werden die Ergebnisse der Bemessungsrechnung entsprechend der eingegebenen Werte und Parameter angezeigt. Wie in dem beispielhaften Screenshot zu sehen ist, erfüllt die geplante Befestigung die Bemessungsvorschriften hinsichtlich sämtlicher hier berücksichtigten Versagensmechanismen im Hinblick auf die Zugbeanspruchung (Stahlversagen, Herausziehen, Betonausbruch). Ferner werden auch die Bemessungsvorschriften bezüglich der Querbeanspruchung in Bezug auf das Stahlversagen ohne Hebelarm und bezüglich des Betonausbruchs erfüllt, nicht aber das Versagen im Hinblick auf den Betonkantenbruch. Hier übersteigt die Querbeanspruchung den Widerstand bei Querbeanspruchung im Hinblick auf den Versagensmechanismus Betonkantenabbruch um etwa 20%, die Interaktionsbedingung wird sogar um 60% überschritten. Diese Ergebnisse beziehen sich auf die Bemessung bei der üblichen Montage, bei der die Anker 14 senkrecht zur Oberfläche des Befestigungsgrundes 12 gesetzt sind.

Das Computerprogramm kann aber auch Bemessungen vorschlagen, bei denen der Anker nicht senkrecht, sondern unter einem Winkel $\alpha_{Anker}$ zur Flächennormalen des Befestigungsgrundes 12 gesetzt ist. In der gezeigten Ausführungsform schlägt das Programm eine Bemessung für eine geneigte Montage automatisch vor, wenn bestimmte Kriterien erfüllt sind. Ein solches Kriterium kann darin bestehen, dass die Bemessungsvorschriften sich mit einer senkrechten Montage des Ankers nicht erfüllen lassen. Ein weiteres Kriterium kann darin bestehen, dass bei geneigter Montage eine deutlich bessere Tragfähigkeit zu erwarten ist, beispielsweise in Fällen, bei denen eine Schranke in Bezug auf das Verhältnis $V_{Sd}/N_{Sd}$ überschritten wird, oder eine Schranke für $V_{Rk}/N_{Rk}$ unterschritten wird. In manchen Fällen ist es vorteilhaft, eine tragfähigere Konstruktion in Betracht zu ziehen, selbst wenn die Bemessungsvorschriften bei der geplanten Befestigung auch mit einer senkrechten Montage erfüllt werden. Beispielsweise kann dies den Nutzer veranlassen, eine Montage mit Ankern geringeren Querschnitts in Betracht zu ziehen. In manchen Ausführungsformen kann das Computerprogramm auch selbst die geeigneten, in der Regel kostengünstigsten Anker vorschlagen, mit denen sich die Befestigung, unter Ausnutzung der Möglichkeit einer geneigten Montage, realisieren lässt.

In dem in Fig. 6 gezeigten Screenshot ist zu ersehen, dass bei einem Winkel $\alpha_{Anker}$ von 34,23° die Bemessungsvorschrift noch nicht erfüllt wird, die Tragfähigkeit jedoch bereits deutlich besser ist, als im Falle der senkrechten Montage. Bei einem Winkel von 38° hingegen werden alle Bemessungsvorschriften erfüllt.

Es versteht sich, dass es derzeit noch keine offiziell anerkannten Bemessungsvorschriften für eine geneigte Montage von Ankern in Beton gibt. Wenn im Zusammenhang mit Fig. 6 somit auf "Bemessungsvorschriften" Bezug genommen wird, dann betrifft dies die Bemessungsvorschriften, die um die Möglichkeit der geneigten Montage erweitert sind. Die Untersuchungen des Erfinders weisen klar darauf hin, dass dadurch in einer Vielzahl von Anwendungsfällen wesentlich bessere Tragfähigkeiten erzeugt werden können, als gegenwärtig.

In einer vereinfachten Ausführungsform des Computerprogramms kann vorgesehen sein, lediglich eine Bemessung für einen vorbestimmten alternativen Standard-Montagewinkel durchzuführen, beispielsweise einen Montagewinkel von 45°. Die Bemessung kann auf Wunsch, d.h. in Antwort auf eine Nutzereingabe durchgeführt werden und/oder automatisch durchgeführt werden. Eine automatische Durchführung kommt beispielsweise in Betracht, wenn aufgrund der Anbaulage (Randnähe, Hebelarm etc) und der der Bemessung zugrunde liegenden Lasten, insbesondere Zugkraft und Querkraft, Anzeichen dafür vorliegen, dass die Tragfähigkeit bei einer Montage unter dem alternativen Standard-Montagewinkel gegenüber der senkrechten Montage erhöht wäre. Es ist auch möglich, dass grundsätzlich die Bemessungs-Berechnung für die Montage unter dem alternativen Standard-Montagewinkel durchgeführt und das Ergebnis angezeigt wird, oder zumindest dann angezeigt wird, wenn es eine verbesserte Tragfähigkeit verspricht.

Das vorstehend beschriebene Verfahren ist nicht auf einen speziellen Typ Anker beschränkt. Vielmehr ist in der vorliegenden Offenbarung der Begriff "Anker" breit zu verstehen, und er kann sowohl durch einen einteiligen Anker im engsten Sinne als auch durch zwei- oder dreiteilige Systeme gebildet werden, die nachstehend kurz beschrieben werden.

In den Fig. 1 bis 5 sind die Anker 14 jeweils durch Betonschrauben gebildet. Derartige Betonschrauben sind im Stand der Technik bekannt und haben ein typischerweise ein selbstschneidendes Betongewinde, welches einen Lasteinleitungsbereich bildet, einen Schaftabschnitt, und einen Kopf, der sowohl als Kraftantrieb dient, um den Anker zu setzen, als auch zum Festlegen des Anbauteils 10 dient.

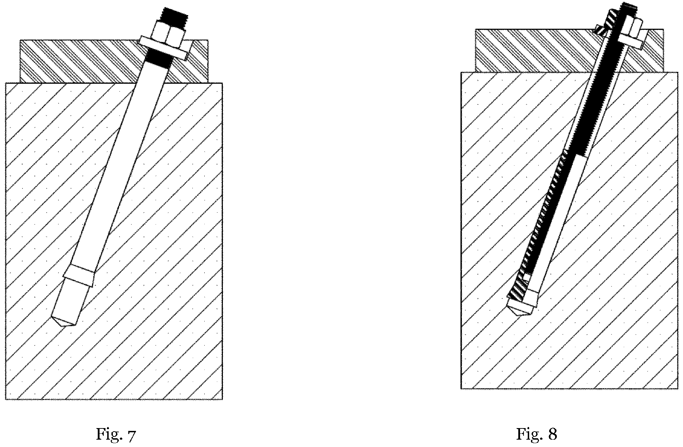

Fig. 7 zeigt ein weiteres Beispiel eines einteiligen Ankers, nämlich einen Hinterschnittanker, der geneigt in den Befestigungsgrund 12 eingebracht ist. An seinem nachlaufenden Ende hat der Hinterschnittanker ein metrisches Gewinde 28, auf dem eine Unterlegscheibe 30 aufgesetzt ist, und die mit einer Mutter 32 gegen das Anbauteil 10 gespannt wird.

Fig. 8 zeigt einen zweiteiligen Anker, der eine Ankerhülse 34 umfasst, die ebenfalls einen Hinterschnitt bereitstellt. Die Ankerhülse 34 ist in Fig. 8 teilweise geschnitten dargestellt, und hat ein metrisches Innengewinde, in das eine Gewindestange 36 geschraubt ist. Am nachlaufenden Ende der Gewindestange 36 ist wiederum eine Unterlegscheibe 30 und eine Mutter 32 angeordnet.

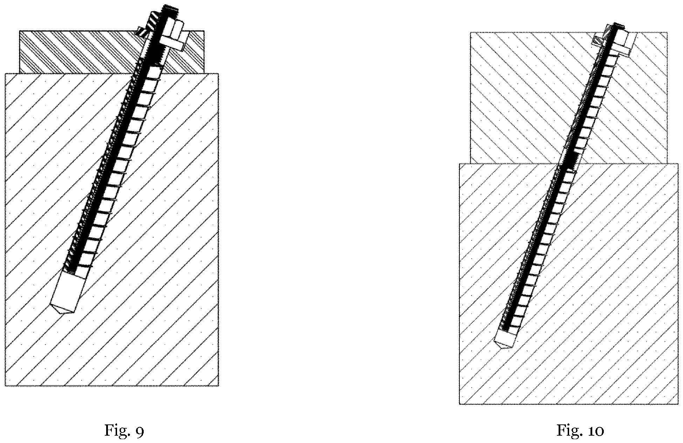

Fig. 9 zeigt ein weiteres Beispiel für einen zweiteiligen Anker, umfassend eine Ankerhülse 40 mit einem selbstschneidenden Außengewinde 38. Im Inneren der Ankerhülse 40 ist wiederum ein metrisches Innengewinde ausgebildet, in welches ebenso wie in Fig. 8 eine Gewindestange 36 eingeschraubt ist. Zur Befestigung des Anbauteils 10 an dem Befestigungsgrund 12 dienen wiederum eine Unterlegscheibe 30 und eine Mutter 32, die gegen das Anbauteil 10 gespannt werden. Die Gewindestange 36 stellt dabei ein Beispiel für ein eingangs genanntes "Spannelement" dar. Die Ankerhülse 40 hat ferner einen Kraftantrieb (in der Figur nicht gezeigt), mit dem sie in den Beton des Befestigungsgrundes 12 geschraubt werden kann.

Fig. 10 zeigt einen Anker 14 gemäß einer verwandten Ausführungsform, der durch ein dreiteiliges System gebildet wird, welches eine erste Gewindehülse 40 von der vorstehend beschriebenen Art umfasst und eine zweite Gewindehülse 42 hat, die kein Innengewinde enthält. In der Darstellung von Fig. 10 ist das Anbauteil 10 ebenfalls ein Betonteil, das mit Hilfe des Ankers 14 mit dem Befestigungsgrund 12 gefügt wird. Ein Beispiel für derartige Anbauteile aus Beton sind Brückenkappen oder Ähnliches.

Wie in Fig. 10 gezeigt ist, ist die erste Gewindehülse 40 in den Befestigungsgrund 12 eingeschraubt, während die zweite Ankerhülse 42 in das Anbauteil 10 eingeschraubt ist. Als Spannelement dient hier wiederum eine Gewindestange 36, die durch die (innengewindefreie) zweite Ankerhülse 42 geführt und in das Innengewinde in der ersten Ankerhülse 40 eingeschraubt wird. Wenn die Mutter 32 festgezogen wird, werden die erste und die zweite Ankerhülse 40, 42 derart axial verspannt, dass die erste und die zweite Ankerhülse 40, 42 gegensinnige Verbundspannungen in dem Befestigungsgrund 12 bzw. dem Anbauteil 10 bilden.

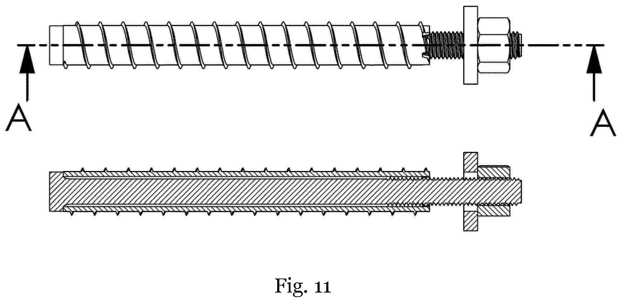

Fig. 11 zeigt eine Seitenansicht und eine Schnittansicht eines alternativen zweiteiligen Systems, welches dem System des Ankers **14** von Fig. 9 grundsätzlich ähnlich ist. Der Unterschied besteht darin, dass die Ankerhülse 40 in diesem Fall kein Innengewinde hat, und das Spannelement in diesem Fall durch eine Schraube **44** gebildet wird, die verkehrt herum, d.h. mit dem Kopf 46 nach vorne in das Bohrloch einzuführen ist, bevor die Ankerhülse 40 eingeschraubt wird. Der Kopf 46 befindet sich dann am führenden Ende des Spannelements **44** und bildet ein Anschlagselement, an dem die Ankerhülse 40 anschlagen kann, um eine Last zu übertragen. Diese Variante ist insofern von Vorteil, als die Ankerhülse 40 ohne Innengewinde ausgebildet werden kann. Auch für ein dreiteiliges System wie in Fig. 10 gezeigt, kann ein derartiges Spannelement **44** mit einem Anschlagselement 46 am führenden Ende verwendet werden, wobei wiederum das Spannelement **44** zuerst in das Bohrloch eingebracht wird, und dann die erste und die zweite Hülse 40, 42 über das Spannelement hinweggeführt und in den Befestigungsgrund 12 bzw. das Anbauteil 10 eingeschraubt werden.

Es wird darauf hingewiesen, dass alle Ausführungsformen mit Betongewinde, die die zu übertagende Last über einen Verbundmechanismus in den Beton einleiten, ebenso mit einem Verbundanker, der die Last über eine Verbundmasse in den Beton überträgt, ausgebildet sein können. Weiterhin wird darauf hingewiesen, dass die zuvor beschriebenen Ausführungsformen als rein beispielhaft und die Erfindung nicht einschränkend anzusehen sind und dass die beschriebenen Merkmale in beliebiger Kombination von Bedeutung sein können.

**Beispiele**

Beispiel 1: Verfahren zum Befestigung von Anbauteilen (10) auf einem Befestigungsgrund (12), der durch Beton oder Mauerwerkgebildet wird, mit einer Gruppe von Ankern (14),

wobei für das Verhältnis $V_{Sd}/N_{Sd}$ des Bemessungswerts der Querbelastung $V_{Sd}$ und des Bemessungswerts der Zugbelastung $N_{Sd}$ mindestens eines Ankers (14) in der Ankergruppe gilt: $V_{Sd}/N_{Sd} \geq 0{,}3$, vorzugsweise $V_{Sd}/N_{Sd} \geq 0{,}6$ und besonders vorzugsweise $V_{Sd}/N_{Sd} \geq 1{,}0$,

und wobei für diesen Anker die charakteristischen Widerstände bei Querbeanspruchung $V_{Rk}$ bzw. bei Zugbeanspruchung $N_{Rk}$ die folgende Beziehung erfüllen: $V_{Rk}/N_{Rk} \leq 1{,}1$, dadurch gekennzeichnet, dass der mindestens eine Anker(14) der Ankergruppe mit einem Winkel $\alpha_{Anker}$ zur Senkrechten zur Oberfläche des Befestigungsgrundes (12) derart geneigt eingesetzt ist, dass gilt:

$$\alpha_{Anker} = k * \tfrac{3}{4} * \arctan(V_{Sd}/N_{Sd}) \quad \text{für} \quad N_{Sd} > 0,$$

und

$$\alpha_{Anker} = k * 67{,}5° \quad \text{für} \quad N_{Sd} = 0,$$

mit : $0{,}6 \leq k \leq 1{,}34$, vorzugsweise $0{,}8 \leq k \leq 1{,}34$, unter der Maßgabe, dass $\alpha_{Anker} \leq 75°$, wobei der Neigungswinkel $\alpha_{Anker}$ in der Ebene zu messen ist, in der die der Bemessung zugrundeliegende Querlast $V_{Sd}$ liegt.

Beispiel 2: Verfahren nach Beispiel 1, wobei gilt: $k \leq 1{,}2$, vorzugsweise $k \leq 1{,}15$ und besonders vorzugsweise $k \leq 1{,}1$.

Beispiel 3: Verfahren nach Beispiel 1 oder 2, wobei gilt $k \geq 0{,}85$, vorzugsweise $k \geq 0{,}9$.

Beispiel 4: Verfahren zum Befestigung von Anbauteilen (10) auf einem Befestigungsgrund (12), der durch Beton oder Mauerwerkgebildet wird, mit einer Gruppe von Ankern (14),

wobei für das Verhältnis $V_{Sd}/N_{Sd}$ des Bemessungswerts der Querbelastung $V_{Sd}$ und des Bemessungswerts der Zugbelastung $N_{Sd}$ mindestens eines Ankers (14) in der Ankergruppe gilt: $V_{Sd}/N_{Sd} \geq 0,8$ und vorzugsweise $V_{Sd}/N_{Sd} \geq 1,0$,

und wobei für diesen Anker die charakteristischen Widerstände bei Querbeanspruchung $V_{Rk}$ bzw. bei Zugbeanspruchung $N_{Rk}$ die folgende Beziehung erfüllen: $V_{Rk}/N_{Rk} \leq 1,1$,

dadurch gekennzeichnet, dass der mindestens eine Anker(14) der Ankergruppe mit einem Winkel $\alpha_{Anker}$ von zwischen 35° und 55°, vorzugsweise von zwischen 40° und 50°, und besonders vorzugsweise von etwa 45° zur Senkrechten zur Oberfläche des Befestigungsgrundes (12) geneigt eingesetzt ist, wobei der Neigungswinkel $\alpha_{Anker}$ in der Ebene zu messen ist, in der die der Bemessung zugrundeliegende Querlast $V_{Sd}$ liegt.

Beispiel 5: Verfahren nach einem der vorhergehenden Beispiele, wobei die charakteristischen Widerstände bei Querbeanspruchung $V_{Rk}$ bzw. bei Zugbeanspruchung $N_{Rk}$ die folgende Beziehung erfüllen:

$$V_{Rk}/N_{Rk} \leq 1,0,$$

vorzugsweise $\leq 0,8$, und besonders vorzugsweise $\leq 0,6$.

Beispiel 6: Verfahren nach einem der vorhergehenden Beispiele, wobei der mindestens eine Anker (14) durch eine Bohrung in dem Anbauteil (10) geführt ist, wobei der Durchmesser der Bohrung den Durchmesser des Ankers (14) in einem Abschnitt, in dem er im montierten Zustand in der Bohrung aufgenommen ist, um weniger als 22%, vorzugweise weniger als 12 % übersteigt.

Beispiel 7: Verfahren nach einem der vorhergehenden Beispiele, bei dem der genannte Anker (14) ein randnäherer Anker innerhalb der Ankergruppe ist, und die Ankergruppe einen randferneren Anker enthält, der senkrecht zur Oberfläche des Befestigungsgrundes (12) eingesetzt wird.

Beispiel 8: Verfahren nach einem der Beispiele 1 bis 5, bei dem der genannte Anker (14) ein randferner Anker (14) innerhalb der Ankergruppe ist, und die Ankergruppe einen randnäheren Anker enthält, der in einem Langloch (16) in dem Anbauteil untergebracht ist und senkrecht zur Oberfläche des Befestigungsgrundes (12) eingesetzt wird.

Beispiel 9: Verfahren nach einem der Beispiele 1 oder 3 bis 5, bei dem zwischen dem Anbauteil (10) und dem Befestigungsgrund (12) ein Zwischenraum vorhanden ist, in dem sich ein nicht-druckfestes Material befindet, und bei dem gilt: $k \geq 1,1$, vorzugsweise $k \geq 1,2$ und besonders vorzugsweise $k \geq 1,25$.

Beispiel 10: Verfahren nach einem der vorhergehenden Beispiele, wobei der mindestens eine Anker (14) durch einen einteiligen Anker gebildet wird, der folgendes umfasst:

-    einen Lasteinleitungsbereich, der im Bereich eines führenden Endes des Ankers angeordnet ist und geeignet ist, eine Last in den Befestigungsgrund (12) einzuleiten,
-    einen Schaftabschnitt,
-    einen Abschnitt oder ein Element (30, 32), um den Anker im Bereich eines nachlaufenden Endes an dem Anbauteil festzulegen, und
-    einen Kraftantrieb (30, 32), um den Anker zu setzen.

Beispiel 11: Verfahren nach einem der Beispiele 1 bis 9, bei dem der mindestens eine Anker durch ein zweiteiliges System gebildet wird, welches eine Ankerhülse (34, 40) und ein Spannelement (36, 44) umfasst,

wobei die Ankerhülse (34, 40) geeignet ist, eine Last in den Befestigungsgrund (12) einzuleiten und ein Innengewinde aufweist, und
wobei das Spannelement (36, 44)

-    einen Schaftabschnitt aufweist, der im Bereich seines führenden Endes ein Außengewinde hat, mit dem er in das Innengewinde der Ankerhülse geschraubt werden kann, um eine Last zu übertragen,
-    einen Abschnitt oder ein Element (30, 32) umfasst, um den Schaftabschnitt des Spannelements im Bereich eines nachlaufenden Endes an dem Anbauteil (10) festzulegen, und
-    einen Kraftantrieb aufweist, um das Spannelement in die Ankerhülse zu schrauben.

Beispiel 12: Verfahren nach Beispiel 10 oder 11, bei dem der genannte Abschnitt zum Festlegen des Ankers (14) bzw. des Spannelements an dem Anbauteil durch einen Schraubenkopf (32) gebildet wird, der gleichzeitig den genannten Kraftantrieb (32) bildet.

Beispiel 13: Verfahren nach einem der Beispiele 1 bis 9, bei dem der mindestens eine Anker durch ein zweiteiliges System gebildet wird, welches eine Ankerhülse (40) und ein Spannelement (44, 36) umfasst,

wobei die Ankerhülse (40) geeignet ist, eine Last in den Befestigungsgrund (12) einzuleiten, und
wobei das Spannelement (44)

- einen Schaftabschnitt aufweist, der im Bereich seines führenden Endes ein Anschlagselement, insbesondere einen Schraubenkopf (46) oder eine aufgeschraubte Mutter hat, an dem die Ankerhülse(40) anschlagen kann, um eine Last zu übertragen, und
- einen Abschnitt oder ein Element (30, 32) umfasst, um den Schaftabschnitt des Spannelements im Bereich eines nachlaufenden Endes an dem Anbauteil festzulegen.

Beispiel 14: Verfahren nach Beispiel 11 oder 13, bei dem an dem nachlaufenden Ende des Ankers bzw. des Spannelementes ein Gewinde vorgesehen ist, und das genannte Element zum Festlegen des Ankers bzw. Spannelementes durch eine Mutter (32) gebildet wird, die auf dem Gewinde gegen das Anbauteil (10) geschraubt werden kann.

Beispiel 15: Verfahren nach einem der Beispiele 1 bis 9, bei dem der Anker durch ein mehrteiliges System gebildet wird, das folgendes umfasst:

eine erste Ankerhülse (40), die geeignet ist, eine Last in den Befestigungsgrund (12) einzuleiten,
eine zweite Ankerhülse (42), die geeignet ist, eine Last in das Anbauteil (10) einzuleiten, und
ein längliches Spannelement (36), welches geeignet ist, durch die zweite Ankerhülse (42) hindurchgeführt und in die erste Ankerhülse (40) eingeführt oder durch diese durchgeführt zu werden, und das geeignet ist, die erste und die zweite Ankerhülse (40, 42) axial derart zu verspannen, dass die erste und die zweite Ankerhülse (40, 42) gegensinnige Verbundspannungen in dem Befestigungsgrund (12) bzw. Anbauteil (10) bilden.

Beispiel 16: Computerprogrammprodukt, umfassend eine Mehrzahl von Instruktionen, die bei Ausführung auf einem Computersystem folgende Schritte ausführen:

Ausgeben eines Graphical User Interface (GUI) über eine Anzeigeeinrichtung, wobei das GUI Eingabefelder (20-26) hat, die es einen Nutzer gestatten, Information bezüglich einer geplanten Befestigung eines Anbauteils auf einem Befestigungsgrund aus Beton oder Mauerwerk mit einer Gruppe von Ankern einzugeben, wobei diese Information zumindest einen Bemessungswert der Querbelastung $V_{Sd}$ und einen Bemessungswert der Zugbelastung $N_{Sd}$ zumindest eines Ankers (14) in der Ankergruppe repräsentiert, oder diese Bemessungswerte $V_{Sd}$ und $N_{Sd}$ aus dieser Information ableitbar sind,
wobei das GUI ferner dazu eingerichtet ist anzuzeigen, ob die geplante Befestigung vorgegebenen Bemessungsvorschriften entspricht,
wobei das Computerprogramm dazu eingerichtet ist, zumindest in Fällen, in denen

- für das Verhältnis $V_{Sd}/N_{Sd}$ des Bemessungswerts der Querbelastung $V_{Sd}$ und des Bemessungswerts der Zugbelastung $N_{Sd}$ eines Ankers (14) in der Ankergruppe gilt: $V_{Sd}/N_{Sd} \geq 0{,}3$, vorzugsweise $V_{Sd}/N_{Sd} \geq 0{,}6$ und besonders vorzugsweise $V_{Sd}/N_{Sd} \geq 1{,}0$, und
- in denen die charakteristischen Widerstände bei Querbeanspruchung $V_{Rk}$ bzw. bei Zugbeanspruchung $N_{Rk}$ dieses Ankers (14) die folgende Beziehung erfüllen: $V_{Rk}/N_{Rk} \leq 1{,}1$,

eine Berechnung der Bemessung dieses Ankers der Ankergruppe für eine Montage mit einem Winkel $\alpha_{Anker}$ zur Senkrechten zur Oberfläche des Befestigungsgrundes (12) durchzuführen, für den gilt:

$$\alpha_{Anker} = k * \tfrac{3}{4} * \arctan( V_{Sd} / N_{Sd} ) \quad \text{für} \quad N_{Sd} > 0,$$

und

$$\alpha_{Anker} = k * 67{,}5° \quad \text{für} \quad N_{Sd} = 0,$$

mit : $0{,}8 \leq k \leq 1{,}34$, unter der Maßgabe, dass $\alpha_{Anker} \leq 75°$, wobei
$\alpha_{Anker}$ der Neigungswinkel des Ankers (14) gegenüber der Senkrechten zur Oberfläche des Befestigungsgrundes (12) ist, wobei der Neigungswinkel $\alpha_{Anker}$ in der Ebene zu messen ist, in der die der Bemessung zugrundeliegende Querlast $V_{Sd}$ liegt, und das Ergebnis der Bemessung auszugeben.

Beispiel 17: Computerprogrammprodukt, umfassend eine Mehrzahl von Instruktionen, die bei Ausführung auf einem Computersystem folgende Schritte ausführen:

Ausgeben eines Graphical User Interface (GUI) über eine Anzeigeeinrichtung,

wobei das GUI Eingabefelder (20-26) hat, die es einen Nutzer gestatten, Information bezüglich einer geplanten Befestigung eines Anbauteils auf einem Befestigungsgrund aus Beton oder Mauerwerk mit einer Gruppe von Ankern einzugeben, wobei diese Information zumindest einen Bemessungswert der Querbelastung $V_{Sd}$ und einen Bemessungswert der Zugbelastung $N_{Sd}$ zumindest eines Ankers (14) in der Ankergruppe repräsentiert, oder diese Bemessungswerte $V_{Sd}$ und $N_{Sd}$ aus dieser Information ableitbar sind,

wobei das GUI ferner dazu eingerichtet ist anzuzeigen, ob die geplante Befestigung vorgegebenen Bemessungsvorschriften entspricht,
wobei das Computerprogramm dazu eingerichtet ist, eine Berechnung der Bemessung dieses Ankers der Ankergruppe für eine Montage mit einem Winkel $\alpha_{Anker}$ zur Senkrechten zur Oberfläche des Befestigungsgrundes (12) durchzuführen, für den gilt $35° \leq \alpha_{Anker} \leq 55°$, vorzugsweise $40° \leq \alpha_{Anker} \leq 50°$, besonders vorzugsweise $43° \leq \alpha_{Anker} \leq 48°$,

wobei der Neigungswinkel $\alpha_{Anker}$ in der Ebene zu messen ist, in der die der Bemessung zugrundeliegende Querlast $V_{Sd}$ liegt, und das Ergebnis der Bemessung auszugeben.

Beispiel 18: Computerprogrammprodukt nach Beispiel 16 oder 17, bei dem die Eingabefelder des GUI es dem Nutzer gestatten, Informationen bezüglich einer oder mehrerer der folgenden Merkmale einzugeben: Art bzw. Beschaffenheit des Verankerungsgrundes (12); Art, Größe, Form und Material einer Ankerplatte (10), Bemessungswerte bezüglich Zugkraft, Querkraft, Torsionsmoment, und/oder Biegemoment, Art und/oder Abmessung des Ankers.
Beispiel 19: Computerprogrammprodukt nach einem der Beispiele 16 bis 18, welches dazu eingerichtet ist, zunächst eine Bemessung für einen senkrecht zum Verankerungsgrund (12) gesetzten Anker (14) zu berechnen, und für den Fall, dass dieser die Bemessungsvorschriften nicht erfüllt, alternativ eine geneigte Montage, die die Bemessungsvorschriften erfüllt, vorzuschlagen.
Beispiel 20: Verfahren zum Bemessen einer Befestigung von Anbauteilen (10) auf einem Befestigungsgrund (12), der durch Beton oder Mauerwerkgebildet wird, mit einer Gruppe von Ankern (14),

wobei für das Verhältnis $V_{Sd}/N_{Sd}$ des Bemessungswerts der Querbelastung $V_{Sd}$ und des Bemessungswerts der Zugbelastung $N_{Sd}$ mindestens eines Ankers (14) in der Ankergruppe gilt: $V_{Sd}/N_{Sd} \geq 0{,}3$, vorzugsweise $V_{Sd}/N_{Sd} \geq 0{,}6$ und besonders vorzugsweise $V_{Sd}/N_{Sd} \geq 1{,}0$,
und wobei für diesen Anker die charakteristischen Widerstände bei Querbeanspruchung $V_{Rk}$ bzw. bei Zugbeanspruchung $N_{Rk}$ die folgende Beziehung erfüllen: $V_{Rk}/N_{Rk} \leq 1{,}1$,
dadurch gekennzeichnet, dass für diesen Anker (14) geprüft wird, ob der Bemessungswert der Lasteinwirkung den Bemessungswert der Widerstände dieses Ankers gegenüber mindestens einem Versagensmechanismus übersteigt, für den Fall, dass dieser Anker(14) mit einem Winkel $\alpha_{Anker}$ zur Senkrechten zur Oberfläche des Befestigungsgrundes (12) derart geneigt eingesetzt ist, dass gilt:

$$\alpha_{Anker} = k * \tfrac{3}{4} * \arctan(V_{Sd}/N_{Sd}) \quad \text{für} \quad N_{Sd} > 0,$$

und

$$\alpha_{Anker} = k * 67{,}5° \quad \text{für} \quad N_{Sd} = 0,$$

mit : $0{,}6 \leq k \leq 1{,}34$, vorzugsweise $0{,}8 \leq k \leq 1{,}34$, unter der Maßgabe, dass $\alpha_{Anker} \leq 75°$,
wobei der Neigungswinkel $\alpha_{Anker}$ in der Ebene zu messen ist, in der die der Bemessung zugrundeliegende Querlast $V_{Sd}$ liegt.

Beispiel 21: Verfahren nach Beispiel 20, wobei gilt: $k \leq 1{,}2$, vorzugsweise $k \leq 1{,}15$ und besonders vorzugsweise $k \leq 1{,}1$.
Beispiel 22: Verfahren nach Beispiel 20 oder 21, wobei gilt $k \geq 0{,}85$, vorzugsweise $k \geq 0{,}9$.
Beispiel 23: Verfahren zum Bemessen einer Befestigung von Anbauteilen (10) auf einem Befestigungsgrund (12)), der durch Beton oder Mauerwerkgebildet wird, mit einer Gruppe von Ankern (14),

wobei für das Verhältnis $V_{Sd}/N_{Sd}$ des Bemessungswerts der Querbelastung $V_{Sd}$ und des Bemessungswerts der Zugbelastung $N_{Sd}$ mindestens eines Ankers (14) in der Ankergruppe gilt: $V_{Sd}/N_{Sd} \geq 0{,}8$ und vorzugsweise $V_{Sd}/N_{Sd} \geq 1{,}0$,

und wobei für diesen Anker die charakteristischen Widerstände bei Querbeanspruchung $V_{Rk}$ bzw. bei Zugbeanspruchung $N_{Rk}$ die folgende Beziehung erfüllen: $V_{Rk}/N_{Rk} \leq 1{,}1$,

dadurch gekennzeichnet, dass für diesen Anker (14) geprüft wird, ob der Bemessungswert der Lasteinwirkung den Bemessungswert der Widerstände dieses Ankers gegenüber mindestens einem Versagensmechanismus übersteigt, für den Fall, dass dieser Anker(14) mit mit einem Winkel $\alpha_{Anker}$ von zwischen 35° und 55°, vorzugsweise von zwischen 40° und 50°, und besonders vorzugsweise von etwa 45° zur Senkrechten zur Oberfläche des Befestigungsgrundes (12) geneigt eingesetzt ist, wobei der Neigungswinkel $\alpha_{Anker}$ in der Ebene zu messen ist, in der die der Bemessung zugrundeliegende Querlast $V_{Sd}$ liegt.

Beispiel 24: Verfahren nach einem der Beispiele 20 bis 23, wobei die charakteristischen Widerstände bei Querbeanspruchung $V_{Rk}$ bzw. bei Zugbeanspruchung $N_{Rk}$ die folgende Beziehung erfüllen:

$$V_{Rk}/N_{Rk} \leq 1{,}0,$$

vorzugsweise $\leq 0{,}8$, und besonders vorzugsweise $\leq 0{,}6$.

Beispiel 25: Verfahren nach einem der Beispiele 20 bis 24, wobei der mindestens eine Anker (14) durch eine Bohrung in dem Anbauteil (10) geführt ist, wobei der Durchmesser der Bohrung den Durchmesser des Ankers (14) in einem Abschnitt, in dem er im montierten Zustand in der Bohrung aufgenommen ist, um weniger als 22%, vorzugweise weniger als 12 % übersteigt.

Beispiel 26: Verfahren nach einem der Beispiele 20 bis 25, bei dem der genannte Anker (14) ein randnäherer Anker innerhalb der Ankergruppe ist, und die Ankergruppe einen randferneren Anker enthält, der senkrecht zur Oberfläche des Befestigungsgrundes (12) eingesetzt wird.

Beispiel 27: Verfahren nach einem der Beispiele 20 bis 26, bei dem der genannte Anker (14) ein randfernerer Anker innerhalb der Ankergruppe ist, und die Ankergruppe einen randnäheren Anker (14) enthält, der in einem Langloch (16) in dem Anbauteil untergebracht ist und senkrecht zur Oberfläche des Befestigungsgrundes (12) eingesetzt wird.

Beispiel 28: Verfahren nach einem der Beispiele 20 oder 22 bis 27, bei dem zwischen dem Anbauteil (10) und dem Befestigungsgrund (12) ein Zwischenraum vorhanden ist, in dem sich ein nicht-druckfestes Material befindet, und bei dem gilt: $k \geq 1{,}1$, vorzugsweise $k \geq 1{,}2$ und besonders vorzugsweise $k \geq 1{,}25$.

Beispiel 29: Verfahren zum Befestigung von Anbauteilen (10) auf einem Befestigungsgrund (12) nach einem der Beispiele 1 bis 15, welches ein Verfahren zum Bemessen dieser Befestigung nach einem der Beispiele 20 bis 28 beinhaltet.

Beispiel 30: Verfahren zum Befestigung von Anbauteilen (10) auf einem Befestigungsgrund (12) nach Beispiel 29, bei dem die Bemessung dieser Befestigung mithilfe eines Computerprogrammprodukts nach einem der Beispiele 16 bis 19 durchgeführt wird.

## Bezugszeichenliste

| | |
|---|---|
| 10 | Anbauteil |
| 12 | BefestigungsgrundBefestigungsgrund |
| 14 | Anker |
| 16 | Langloch |
| 20, 22, 24, 26 | Felder der GUI |
| 28 | metrisches Gewinde |
| 30 | Unterlegscheibe |
| 32 | Mutter |
| 34 | Ankerhülse |
| 36 | Gewindestange |
| 38 | Außengewinde |
| 40 | erste Ankerhülse |
| 42 | zweite Ankerhülse |
| 44 | Schraube |
| 46 | Kopf |

**Patentansprüche**

1. Verfahren zum Befestigen von Anbauteilen (10) auf einem Befestigungsgrund (12), der durch Beton oder Mauerwerkgebildet wird, mit einer Gruppe von Ankern (14), wobei das Verfahren zur Befestigung ein Verfahren zum Bemessen dieser Befestigung beinhaltet, das mithilfe eines Computerprogrammprodukts durchgeführt wird, welches auf einem Computersystem ausgeführt wird,
wobei das Computerprogrammprodukteine Mehrzahl von Instruktionen umfasst, die bei Ausführung auf dem Computersystem folgende Schritte ausführen:

Ausgeben eines Graphical User Interface (GUI) über eine Anzeigeeinrichtung, wobei das GUI Eingabefelder (20-26) hat, die es einen Nutzer gestatten, Information bezüglich einer geplanten Befestigung eines Anbauteils auf einem Befestigungsgrund aus Beton oder Mauerwerk mit einer Gruppe von Ankern einzugeben, wobei diese Information zumindest einen Bemessungswert der Querbelastung $V_{Sd}$ und einen Bemessungswert der Zugbelastung $N_{Sd}$ zumindest eines Ankers (14) in der Ankergruppe repräsentiert, oder diese Bemessungswerte $V_{Sd}$ und $N_{Sd}$ aus dieser Information ableitbar sind,
wobei das GUI ferner dazu eingerichtet ist anzuzeigen, ob die geplante Befestigung vorgegebenen Bemessungsvorschriften entspricht,
wobei das Computerprogramm dazu eingerichtet ist, zumindest in Fällen, in denen

- für das Verhältnis $V_{Sd}/N_{Sd}$ des Bemessungswerts der Querbelastung $V_{Sd}$ und des Bemessungswerts der Zugbelastung $N_{Sd}$ eines Ankers (14) in der Ankergruppe gilt: $V_{Sd}/N_{Sd} \geq 0{,}3$, vorzugsweise $V_{Sd}/N_{Sd} \geq 0{,}6$ und besonders vorzugsweise $V_{Sd}/N_{Sd} \geq 1{,}0$, und
- in denen die charakteristischen Widerstände bei Querbeanspruchung $V_{Rk}$ bzw. bei Zugbeanspruchung $N_{Rk}$ dieses Ankers (14) die folgende Beziehung erfüllen: $V_{Rk}/N_{Rk} \leq 1{,}1$,

eine Berechnung der Bemessung dieses Ankers der Ankergruppe für eine Montage mit einem Winkel $\alpha_{Anker}$ zur Senkrechten zur Oberfläche des Befestigungsgrundes (12) durchzuführen, für den gilt:

$$\alpha_{Anker} = k * \tfrac{3}{4} * \arctan(V_{Sd}/N_{Sd}) \quad \text{für} \quad N_{Sd} > 0,$$

und

$$\alpha_{Anker} = k * 67{,}5° \qquad\qquad \text{für} \quad N_{Sd} = 0,$$

mit : $0{,}8 \leq k \leq 1{,}34$, unter der Maßgabe, dass $\alpha_{Anker} \leq 75°$, wobei $\alpha_{Anker}$ der Neigungswinkel des Ankers (14) gegenüber der Senkrechten zur Oberfläche des Befestigungsgrundes (12) ist, wobei der Neigungswinkel $\alpha_{Anker}$ in der Ebene zu messen ist,
in der die der Bemessung zugrundeliegende Querlast $V_{Sd}$ liegt, und das Ergebnis der Bemessung auszugeben.

2. Verfahren zum Befestigen von Anbauteilen (10) auf einem Befestigungsgrund (12), der durch Beton oder Mauerwerkgebildet wird, mit einer Gruppe von Ankern (14), wobei das Verfahren zur Befestigung ein Verfahren zum Bemessen dieser Befestigung beinhaltet, das mithilfe eines Computerprogrammprodukts durchgeführt wird, welches auf einem Computersystem ausgeführt wird,
wobei das Computerprogrammprodukt, eine Mehrzahl von Instruktionen umfasst, die bei Ausführung auf einem Computersystem folgende Schritte ausführen:

Ausgeben eines Graphical User Interface (GUI) über eine Anzeigeeinrichtung,
wobei das GUI Eingabefelder (20-26) hat, die es einen Nutzer gestatten, Information bezüglich einer geplanten Befestigung eines Anbauteils auf einem Befestigungsgrund aus Beton oder Mauerwerk mit einer Gruppe von Ankern einzugeben, wobei diese Information zumindest einen Bemessungswert der Querbelastung $V_{Sd}$ und einen Bemessungswert der Zugbelastung $N_{Sd}$ zumindest eines Ankers (14) in der Ankergruppe repräsentiert, oder diese Bemessungswerte $V_{Sd}$ und $N_{Sd}$ aus dieser Information ableitbar sind,
wobei das GUI ferner dazu eingerichtet ist anzuzeigen, ob die geplante Befestigung vorgegebenen Bemessungsvorschriften entspricht,
wobei das Computerprogramm dazu eingerichtet ist, eine Berechnung der Bemessung dieses Ankers der Ankergruppe für eine Montage mit einem Winkel $\alpha_{Anker}$ zur Senkrechten zur Oberfläche des Befestigungsgrundes (12) durchzuführen, für den gilt $35° \leq \alpha_{Anker} \leq 55°$, vorzugsweise $40° \leq \alpha_{Anker} \leq 50°$, besonders

vorzugsweise $43° \leq \alpha_{Anker} \leq 48°$,

wobei der Neigungswinkel $\alpha_{Anker}$ in der Ebene zu messen ist, in der die der Bemessung zugrundeliegende Querlast $V_{Sd}$ liegt, und das Ergebnis der Bemessung auszugeben.

3. Verfahren nach Anspruch 1 oder 2, bei dem die Eingabefelder des GUI es dem Nutzer gestatten, Informationen bezüglich einer oder mehrerer der folgenden Merkmale einzugeben: Art bzw. Beschaffenheit des Verankerungsgrundes (12); Art, Größe, Form und Material einer Ankerplatte (10), Bemessungswerte bezüglich Zugkraft, Querkraft, Torsionsmoment, und/oder Biegemoment, Art und/oder Abmessung des Ankers.

4. Verfahren nach einem der Ansprüche 1 bis 3, welches dazu eingerichtet ist, zunächst eine Bemessung für einen senkrecht zum Verankerungsgrund (12) gesetzten Anker (14) zu berechnen, und für den Fall, dass dieser die Bemessungsvorschriften nicht erfüllt, alternativ eine geneigte Montage, die die Bemessungsvorschriften erfüllt, vorzuschlagen.

Fig. 1

Fig. 2

Fig. 3

Fig. 4

Fig. 5

Fig. 6

Fig. 7

Fig. 8

Fig. 9

Fig. 10

Fig. 11